# EUROPEAN PATENT SPECIFICATION

(11) **EP 4 492 222 B1**
(45) Date of publication and mention of the grant of the patent: **24.06.2026**
(21) Application number: 23795127.2
(22) Date of filing: 19.04.2023
(51) Int. Cl.: G06F 8/38, G06F 3/0481, G06F 3/0484, G06F 3/04845, G06F 3/0487, G06F 3/147, G06F 9/451, H04M 1/02, H04M 1/72454, G06F 1/16, G06F 3/04886

(54) **DISPLAY METHOD AND APPARATUS, AND STORAGE MEDIUM**
ANZEIGEVERFAHREN UND -VORRICHTUNG SOWIE SPEICHERMEDIUM
PROCÉDÉ ET APPAREIL D'AFFICHAGE, ET SUPPORT DE STOCKAGE

(30) Priority: 28.04.2022 CN 202210461284
(43) Date of publication of application: 15.01.2025
(73) Proprietor: Huawei Technologies Co., Ltd., Shenzhen, Guangdong 518129 (CN)
(72) Inventor: SHAN, Chang, Shenzhen, Guangdong 518129 (CN); LIN, Zhenchao, Shenzhen, Guangdong 518129 (CN); LU, Dong, Shenzhen, Guangdong 518129 (CN); XU, Shun, Shenzhen, Guangdong 518129 (CN); LU, Jianhai, Shenzhen, Guangdong 518129 (CN)
(74) Representative: Körber, Martin Hans
(86) International application number: PCT/CN2023/089154
(87) International publication number: WO 2023/207694

(56) References cited:
- EP-A1- 3 982 238
- EP-A1- 3 995 948
- EP-B1- 3 211 911
- CN-A- 103 744 595
- CN-A- 103 927 143
- CN-A- 103 927 143
- CN-A- 109 783 181
- CN-A- 110 554 816
- CN-A- 110 597 510
- CN-A- 110 597 510
- CN-A- 113 268 303
- CN-A- 114 077 429
- CN-A- 114 089 932
- CN-A- 114 327 701
- CN-A- 114 356 258
- US-A1- 2010 097 400

## Description

### TECHNICAL FIELD

This application relates to the field of communication technologies, and in particular, as per the enclosed claim set and the description, to a display method, and a communication apparatus. Described are the display method, a terminal, the communication apparatus, a computer-readable storage medium, a computer program product, and a chip system.

### BACKGROUND

With development of display technologies, large-screen terminals have emerged. For example, mobile phone manufacturers have launched foldable mobile phones. Some foldable mobile phones are provided with foldable flexible screens, and the flexible screens may be folded into small screens or unfolded into large screens through hinges or the like. This brings new experience of being both a mobile phone and a tablet computer to users.

However, currently, for such large-screen terminals, user interfaces of applications cannot be well adapted to the large-screen terminals. This affects use experience of foldable mobile phone users.

Document EP 3 982 238 A1 discloses an interface generation method for applying to a device. The device has a development function, and may provide a method for automatically adjusting a layout of a visual element on a to-be-generated interface to quickly generate an interface. The method includes: obtaining a visual element of a reference interface, obtaining configuration information of a display of a target terminal device, determining a visual focus of the visual element based on attribute information of the visual element, determining, based on the configuration information of the display, an interface layout template corresponding to the configuration information, and adjusting, based on the visual focus and the interface layout template, a layout of the visual element on a to-be-generated interface, and generating an interface.

CN 110 597 510 A discloses, as per the late filed document EP 3 995 948 A1 used as an English translation thereof, a dynamic layout for an element on an interface according to a layout rule and based on a current display orientation/resolution/display mode. A width of a screen of an electronic device is divided into a plurality of columns. When the display mode/resolution/orientation changes the new number of column is calculated and the elements of the GUI are displayed according to their layout and the new number of columns as well as any number of constraints of the view and layout of the GUI elements. EP 3 211 911 B1, CN 103 927 143 A, and CN 114 327 701 A disclose display methods and devices that may be useful for better understanding, and appreciating the present invention as claimed.

### SUMMARY

Embodiments of this application provide a display method, an apparatus, and a storage medium, to adapt display of a user interface of an application to large-screen display. The present invention is defined by the enclosed claims. In the following description, embodiments which are not covered by the claims are to be considered as examples necessary for understanding the invention.

According to a first aspect, a display method is provided for implementation by a terminal or by an apparatus or a module that is configured to implement the display method, wherein a display status of the terminal comprises a large-screen state and a small-screen state, the terminal is configured to run at least a first application, the first application is configured to be displayed, on a display screen of the terminal, in full screen, a display mode of the first application displayed in full screen in the large-screen state of the terminal is a large-screen display mode, and a display mode of the first application displayed in full screen in the small-screen state of the terminal is a small-screen display mode, wherein a control is a graphical user interface element configured to lay out an object or data on the graphical user interface in the form of at least one internal element of the control, and wherein a control can implement at least the following functions: a function of obtaining a screen size of a terminal and a window size of an application, a function of identifying a type of an internal element of the control, and a function of determining a scaling size and a layout of the internal element based on the screen size of the terminal, the window size of the application, and the type of the internal element. The display method comprises: detecting a first trigger event used to trigger displaying a first application in the large-screen display mode, and determining, based on the first trigger event, that the first application is in the large-screen display mode; obtaining an internal element of a control on a first user interface of the terminal, and identifying a type of the internal element; determining a scaling size of the internal element based on the determined type of the internal element, and determining a layout of the internal element based on the determined scaling size of the internal element and a size of the control in the large-screen display mode of the first application; drawing a second user interface of the terminal based on the determined scaling size of the internal element and the determined layout of the internal element of the control, and displaying the second user interface of the terminal.

Optionally, the first user interface is a native user interface of the first application in the large-screen display mode.

In the foregoing implementation, when determining, based on the first trigger event, that the first application is in the large-screen display mode, the terminal may perform scaling processing on the internal element of the control, re-lay out a scaled element, and display an adjusted user interface (the second user interface), so that the second user interface can adapt to the large-screen display mode.

In a possible implementation, the size of the control in the large-screen display mode includes a width of the control in the large-screen display mode. The width of the control in the large-screen display mode is associated with a screen width in the large-screen display mode, for example, in a scenario in which the first application is displayed in full screen. Alternatively, the width of the control in the large-screen display mode is associated with a window width of the first application in the large-screen display mode, for example, in a scenario in which a window in which the first application is located is a window in a multi-window mode. Alternatively, the control is nested in a first control as a child control, and the width of the control in the large-screen display mode is associated with a scaling width that is of the child control and that is determined by the first control in the large-screen display mode.

In a possible implementation, if the first user interface includes a first pop-up window, the method further includes: The terminal obtains an internal element of a control in the first pop-up window, determines a scaling size of the element, determines a scaling size of the control in the first pop-up window based on the scaling size of the element, and determines a scaling size of the first pop-up window based on the scaling size of the control in the first pop-up window. The terminal determines, based on the scaling size of the first pop-up window, a location of a scaled first pop-up window. The terminal draws a second pop-up window based on a size of the first pop-up window and the location of the scaled first pop-up window. The second pop-up window is included on the second user interface, and the second pop-up window includes an element obtained through scaling based on the scaling size of the internal element of the control in the first pop-up window.

In the foregoing implementation, for a case in which a pop-up window exists on the user interface, a size and a location of the pop-up window may also be adjusted in the large-screen display mode, to adapt to large-screen display.

In a possible implementation, the determining a scaling size of the element includes: obtaining a type of the element; obtaining, based on the type of the element, a scaling strategy corresponding to the type of the element; and determining the scaling size of the element based on the size of the control in the large-screen display mode and the scaling strategy.

In the foregoing implementation, the corresponding scaling strategy is determined based on the type of the element, so that differentiated scaling processing can be performed on different types of elements based on display features of the different types of elements. In this way, the second user interface can adapt to large-screen display.

In a possible implementation, the type of the element is one of a text type and an image type. If the type of the element is the image type, the image type is one of a plurality of subtypes, and the plurality of subtypes are separately associated with an aspect ratio of an image.

In the foregoing implementation, for the element of the image type, the type can be further divided into a plurality of subtypes based on the aspect ratio of the image, different scaling strategies are set for different subtypes, and differentiated misplacement processing can be performed on images of different subtypes based on display features of the images of different subtypes. This can improve viewing experience of a user.

In a possible implementation, a scaling ratio of a width of the element before scaling to that of the element after scaling is equal to a scaling ratio of a height of the element before scaling to that of the element after scaling. A proportional scaling effect of an element can be implemented in the foregoing implementation, so that deformation of the element can be avoided.

In a possible implementation, if the control is a view flipping control, the determining a scaling size of the element includes: obtaining a quantity of internal elements of the view flipping control; and determining a quantity of internal elements of the view flipping control on the second user interface and a scaling size of each element based on the quantity of internal elements of the view flipping control, a size of the view flipping control in the large-screen display mode, and a display effect of the view flipping control in the large-screen display mode.

Based on the foregoing implementation, for a control for page flipping display, a quantity of elements displayed in the control on the second user interface and a scaling size of the elements can be dynamically determined based on a page flipping display effect required in the large-screen mode, so that display of the control adapts to the large-screen mode. This feature improves user experience.

In a possible implementation, before the determining a scaling size of the element, the method further includes: if a size of the element is less than or equal to a specified threshold and/or the element is not an element of a specified type, abandoning scaling on the element.

In the foregoing implementation, only an element that meets the specified requirement may be scaled, and an element that does not meet the requirement may not be scaled, so that the second user interface can adapt to the large-screen mode. For example, if the size of the element is large (for example, a width of the element is greater than a width threshold and/or a height of the element is greater than a height threshold), the element needs to be scaled. If the size of the element is small (for example, a width of the element is less than or equal to a width threshold and/or a height of the element is less than or equal to a height threshold), the element does not need to be scaled, so that the internal element of the control can adapt to the large-screen mode. This improves viewing experience of the user.

In a possible implementation, the determining a scaling size of the element includes: if a size of the element is less than or equal to a specified threshold, determining to scale up the element, and determining the scaling size of the element based on the specified threshold, where a size, obtained through scaling up based on the scaling size, of the element is not less than the specified threshold.

In the foregoing implementation, when the size of the element is small (for example, a width of the element is less than a width threshold and/or a height of the element is less than a height threshold), the element can be scaled up to a size equivalent to the threshold. When the size of the element is large (for example, a width of the element is greater than a width threshold and/or a height of the element is greater than a height threshold), the element can be scaled down, so that the internal element of the control can adapt to the large-screen mode. This improves viewing experience of the user.

In a possible implementation, after the determining a scaling size of the element, the method further includes: if the scaling size of the element is less than or equal to the specified threshold, abandoning scaling on the element; or if the scaling size of the element is less than or equal to the specified threshold, determining the scaling size of the element based on the specified threshold, where a size, obtained through scaling based on the scaling size, of the element is not less than the specified threshold.

In the foregoing implementation, after the scaling size of the element is determined, if the scaling size is small (for example, a width of the scaled-down element is less than or equal to the width threshold and/or a height of the scaled-down element is less than or equal to the height threshold), scaling on the element may be abandoned, or the scaling size of the element may be re-determined based on the specified threshold, so that a size of the scaled element may be equivalent to a size corresponding to the specified threshold, and the internal element of the control can adapt to the large-screen mode. This feature improves user experience.

In a possible implementation, the scaling size of the element is less than a size of the element on the first user interface; and a quantity of elements on the second user interface is greater than a quantity of elements on the first user interface. Because the size of the element is reduced through scaling processing, the second user interface is enabled to display more elements than those on the first user interface, so that the second user interface adapts to large-screen display.

In a possible implementation, the determining that a first application is in a large-screen display mode includes: obtaining a window width of the first application; and if the window width is greater than or equal to a specified threshold, determining that the first application is in the large-screen display mode.

In a possible implementation, the first trigger event includes: a terminal switches from a folded state to an unfolded state; a terminal switches from a portrait mode to a landscape mode; an entire screen of a terminal is lit up; a screen of a terminal is projected onto a large screen; data of the first application is updated when the first application is in the large-screen display mode; a screen operation event of a user is detected when the first application is in the large-screen display mode; or a multi-window display mode is canceled and the first application is displayed in full screen when it is detected that a terminal is in a large-screen state, where in the multi-window display mode, at least two windows are displayed on a screen of the terminal, and one of the at least two windows is used to display the first application.

In a possible implementation, before the determining, based on the first trigger event, that a first application is in a large-screen display mode, the method further includes: determining whether the first application is allowed to perform user interface adjustment in the large-screen display mode; and the determining, based on the first trigger event, that a first application is in a large-screen display mode includes: if the first application is allowed to perform user interface adjustment in the large-screen display mode, determining whether the first application is in the large-screen display mode.

In the foregoing implementation, for an application on which user interface adjustment is allowed to be performed in only the large-screen display mode, when a user interface of the application needs to be displayed in the large-screen display mode, the user interface of the application may be adjusted in the large-screen display mode, so that system flexibility can be improved and different needs of the user can be met.

In a possible implementation, the control includes a linear layout control; and the linear layout control is configured to: determine a scaling size of an internal element when it is determined, based on the first trigger event, that the first application is in the large-screen display mode; and determine a linear layout of the internal element based on the scaling size of the internal element and a size of the linear layout control in the large-screen display mode.

In a possible implementation, the control includes a recycler view control; and the recycler view control is configured to: determine a scaling size of an internal element when it is determined, based on the first trigger event, that the first application is in the large-screen display mode; and determine a quantity of columns of internal elements and a spacing between the columns based on a scaling width of the internal element and a width of the recycler view control in the large-screen display mode.

In a possible implementation, the control includes a list view control; and the list view control is configured to: determine a scaling size of an internal element when it is determined, based on the first trigger event, that the first application is in the large-screen display mode; and determine a quantity of columns of internal elements and a spacing between the columns based on the scaling size of the internal element and a width of the list view control in the large-screen display mode.

In a possible implementation, the control includes a grid view control; and the grid view control is configured to: determine a scaling size of an internal element when it is determined, based on the first trigger event, that the first application is in the large-screen display mode; and determine a quantity of columns of internal elements and a spacing between the columns based on the scaling size of the internal element and a width of the grid view control in the large-screen display mode.

In a possible implementation, the control includes a view flipping control; and the view flipping control is configured to: determine a scaling size of an internal element when it is determined, based on the first trigger event, that the first application is in the large-screen display mode; and determine a layout of the internal element based on a quantity of internal elements, the scaling size of the internal element, and a size and a display effect of the view flipping control in the large-screen display mode.

In a possible implementation, the control includes an image view control; and the image view control is configured to: determine a scaling size of an internal element when it is determined, based on the first trigger event, that the first application is in the large-screen display mode; adjust a control height based on a scaled internal element; and determine a layout of the internal element of the image view control based on the scaled internal element.

According to a second aspect not claimed, a terminal is provided. The terminal includes: a detection module, configured to: detect a first trigger event, and determine, based on the first trigger event, that a first application is in a large-screen display mode; a processing module, configured to: obtain an internal element of a control on a first user interface, determine a scaling size of the element, determine a layout of the internal element of the control based on the scaling size of the element and a size of the control in the large-screen display mode, and draw a second user interface based on the scaling size of the element and the layout of the internal element of the control; and a display module, configured to display the second user interface.

In a possible implementation, the size of the control in the large-screen display mode includes a width of the control in the large-screen display mode; and the width of the control in the large-screen display mode is associated with a screen width in the large-screen display mode; or the width of the control in the large-screen display mode is associated with a window width of the first application in the large-screen display mode; or the control is nested in a first control as a child control, and the width of the control in the large-screen display mode is associated with a scaling width that is of the child control and that is determined by the first control in the large-screen display mode.

In a possible implementation, if the first user interface includes a first pop-up window, the processing module is further configured to: obtain an internal element of a control in the first pop-up window, determine a scaling size of the element, determine a scaling size of the control in the first pop-up window based on the scaling size of the element, and determine a scaling size of the first pop-up window based on the scaling size of the control in the first pop-up window; determine, based on the scaling size of the first pop-up window, a location of a scaled first pop-up window; and draw a second pop-up window based on a size of the first pop-up window and the location of the scaled first pop-up window, where the second pop-up window is included on the second user interface, and the second pop-up window includes an element obtained through scaling based on the scaling size of the internal element of the control in the first pop-up window.

In a possible implementation, the processing module is specifically configured to: obtain a type of the element; obtain, based on the type of the element, a scaling strategy corresponding to the type of the element; and determine the scaling size of the element based on the size of the control in the large-screen display mode and the scaling strategy.

In a possible implementation, the type of the element is one of a text type and an image type. If the type of the element is the image type, the image type is one of a plurality of subtypes, and the plurality of subtypes are separately associated with an aspect ratio of an image.

In a possible implementation, a scaling ratio of a width of the element before scaling to that of the element after scaling is equal to a scaling ratio of a height of the element before scaling to that of the element after scaling.

In a possible implementation, if the control is a view flipping control, the processing module is specifically configured to: obtain a quantity of internal elements of the view flipping control; and determine a quantity of internal elements of the view flipping control on the second user interface and a scaling size of each element based on the quantity of internal elements of the view flipping control, a size of the view flipping control in the large-screen display mode, and a display effect of the view flipping control in the large-screen display mode.

In a possible implementation, the processing module is further configured to: if a size of the element is less than or equal to a specified threshold and/or the element is not an element of a specified type, abandon scaling on the element.

In a possible implementation, the processing module is specifically configured to: if a size of the element is less than or equal to a specified threshold, determine to scale up the element, and determine the scaling size of the element based on the specified threshold, where a size, obtained through scaling up based on the scaling size, of the element is not less than the specified threshold.

In a possible implementation, the processing module is further configured to: if the scaling size of the element is less than or equal to the specified threshold, abandon scaling on the element; or if the scaling size of the element is less than or equal to the specified threshold, determine the scaling size of the element based on the specified threshold, where a size, obtained through scaling based on the scaling size, of the element is not less than the specified threshold.

In a possible implementation, the scaling size of the element is less than a size of the element on the first user interface; and a quantity of elements on the second user interface is greater than a quantity of elements on the first user interface.

In a possible implementation, the detection module is specifically configured to: obtain a window width of the first application; and if the window width is greater than or equal to a specified threshold, determine that the first application is in the large-screen display mode.

In a possible implementation, the first trigger event includes: the terminal switches from a folded state to an unfolded state; the terminal switches from a portrait mode to a landscape mode; an entire screen of the terminal is lit up; a screen of the terminal is projected onto a large screen; data of the first application is updated when the first application is in the large-screen display mode; a screen operation event of a user is detected when the first application is in the large-screen display mode; or a multi-window display mode is canceled and the first application is displayed in full screen when it is detected that the terminal is in a large-screen state, where in the multi-window display mode, at least two windows are displayed on a screen of the terminal, and one of the at least two windows is used to display the first application.

In a possible implementation, the processing module is further configured to: before it is determined, based on the first trigger event, that the first application is in the large-screen display mode, determine whether the first application is allowed to perform user interface adjustment in the large-screen display mode; and if the first application is allowed to perform user interface adjustment in the large-screen display mode, determine whether the first application is in the large-screen display mode.

In a possible implementation, the control includes a linear layout control; and the linear layout control is configured to: determine a scaling size of an internal element when it is determined, based on the first trigger event, that the first application is in the large-screen display mode; and determine a linear layout of the internal element based on the scaling size of the internal element and a size of the linear layout control in the large-screen display mode.

In a possible implementation, the control includes a recycler view control; and the recycler view control is configured to: determine a scaling size of an internal element when it is determined, based on the first trigger event, that the first application is in the large-screen display mode; and determine a quantity of columns of internal elements and a spacing between the columns based on a scaling width of the internal element and a width of the recycler view control in the large-screen display mode.

In a possible implementation, the control includes a list view control; and the list view control is configured to: determine a scaling size of an internal element when it is determined, based on the first trigger event, that the first application is in the large-screen display mode; and determine a quantity of columns of internal elements and a spacing between the columns based on the scaling size of the internal element and a width of the list view control in the large-screen display mode.

In a possible implementation, the control includes a grid view control; and the grid view control is configured to: determine a scaling size of an internal element when it is determined, based on the first trigger event, that the first application is in the large-screen display mode; and determine a quantity of columns of internal elements and a spacing between the columns based on the scaling size of the internal element and a width of the grid view control in the large-screen display mode.

In a possible implementation, the control includes a view flipping control; and the view flipping control is configured to: determine a scaling size of an internal element when it is determined, based on the first trigger event, that the first application is in the large-screen display mode; and determine a layout of the internal element based on a quantity of internal elements, the scaling size of the internal element, and a size and a display effect of the view flipping control in the large-screen display mode.

In a possible implementation, the control includes an image view control; and the image view control is configured to: determine a scaling size of an internal element when it is determined, based on the first trigger event, that the first application is in the large-screen display mode; adjust a control height based on a scaled internal element; and determine a layout of the internal element of the image view control based on the scaled internal element.

According to a third aspect, a communication terminal is provided. The communication terminal comprises a display screen for displaying a first application and/or a first user interface and/or a second user interface, a graphical user interface comprising a control configured to lay out an object or data on the graphical user interface in the form of at least one internal element of the control, and one or more processors, wherein one or more memories store one or more computer programs, the one or more computer programs comprise instructions, and when the instructions are executed by the one or more processors, the communication terminal is enabled to draw the first and/or the second user interface, to display the first application and/or the first user interface and/or the second user interface in the display screen, and to perform the method according to any implementation of the first aspect.

According to a fourth aspect not claimed, a computer-readable storage medium is provided. The computer-readable storage medium includes a computer program. When the computer program is run on an electronic device, the electronic device is enabled to perform the method according to any one of the implementations of the first aspect.

According to a fifth aspect not claimed, a computer program product is provided. When the computer program product runs on an electronic device, the electronic device is enabled to perform the method according to any one of the implementations of the first aspect.

According to a sixth aspect not claimed, a chip system is provided. The chip system includes: a memory, configured to store a computer program; and a processor, where after the processor invokes the computer program from the memory and runs the computer program, an electronic device installed with the chip system is enabled to perform the method according to any one of the implementations of the first aspect.

For beneficial effects of the second aspect to the sixth aspect, refer to the beneficial effects of the first aspect. Details are not described again.

### BRIEF DESCRIPTION OF DRAWINGS

FIG. 1a, FIG. 1b, and FIG. 1c are diagrams of a foldable mobile phone;
FIG. 2 is a diagram of a tablet computer;
FIG. 3 is a diagram of a user interface layout implemented by using a linear layout (LinearLayout) control;
FIG. 4 is a diagram of a large-screen display effect obtained in a mailbox mode;
FIG. 5 is a diagram of a large-screen display effect obtained by using a constraint layout;
FIG. 6 is a diagram of a hardware structure of a terminal according to an embodiment of this application;
FIG. 7 is a diagram of a software system architecture of a terminal according to an embodiment of this application;
FIG. 8a is a schematic flowchart of a display method according to an embodiment of this application;
FIG. 8b is a schematic flowchart in which a location and a size of a pop-up window are adjusted in a large-screen display mode according to an embodiment of this application;
FIG. 9 is a diagram of comparison between an adaptive large-screen display adjustment effect obtained by using a native LinearLayout control of a system and an adaptive large-screen display adjustment effect obtained by using a LinearLayout control provided in an embodiment of this application according to an embodiment of this application;
FIG. 10 is a diagram of comparison between an adaptive large-screen display adjustment effect obtained by using a native RecyclerView control of a system and an adaptive large-screen display adjustment effect obtained by using a RecyclerView control provided in an embodiment of this application according to an embodiment of this application;
FIG. 11 is a diagram of comparison between an adaptive large-screen display adjustment effect obtained by using a native ViewPager control of a system and an adaptive large-screen display adjustment effect obtained by using a ViewPager control provided in an embodiment of this application according to an embodiment of this application;
FIG. 12 is a diagram of comparison between an adaptive large-screen display adjustment effect obtained by using a native ListView control of a system and an adaptive large-screen display adjustment effect obtained by using a ListView control provided in an embodiment of this application according to an embodiment of this application;
FIG. 13 is a diagram of comparison between an adaptive large-screen display adjustment effect obtained by using a native GridView control of a system and an adaptive large-screen display adjustment effect obtained by using a GridView control provided in an embodiment of this application according to an embodiment of this application;
FIG. 14 is a diagram of comparison between an adaptive large-screen display adjustment effect obtained by using a native ImageView control of a system and an adaptive large-screen display adjustment effect obtained by using an ImageView control provided in an embodiment of this application according to an embodiment of this application;
FIG. 15 is a diagram of a functional structure of a control according to an embodiment of this application;
FIG. 16 shows a logic processing procedure of a LineaLayout control according to an embodiment of this application;
FIG. 17 shows a logic processing procedure of a RecyclerView control according to an embodiment of this application;
FIG. 18 shows a logic processing procedure of a GridView control according to an embodiment of this application;
FIG. 19 shows a logic processing procedure of a ListView control according to an embodiment of this application;
FIG. 20 shows a logic processing procedure of a ViewPager control according to an embodiment of this application;
FIG. 21 shows a logic processing procedure of an ImageView control according to an embodiment of this application;
FIG. 22 and FIG. 23 are diagrams 1 of comparison between user interface display effects obtained by switching from small-screen display to large-screen display;
FIG. 24 and FIG. 25 are diagrams 2 of comparison between user interface display effects obtained by switching from small-screen display to large-screen display; and
FIG. 26 is a diagram of a structure of a terminal according to an embodiment of this application.

### DESCRIPTION OF EMBODIMENTS

The following clearly and completely describes the technical solutions in embodiments of this application with reference to the accompanying drawings in embodiments of this application. The terms used in the following embodiments are merely intended to describe specific embodiments, but are not intended to limit this application. The terms "one", "a", "the", "the foregoing", "this", and "the one" of singular forms used in this specification and the appended claims of this application are also intended to include expressions such as "one or more", unless otherwise specified in the context clearly. It should be further understood that, in embodiments of this application, "one or more" means one, two, or more, and "and/or" describes an association relationship between associated objects, and indicates that three relationships may exist. For example, A and/or B may indicate the following cases: Only A exists, both A and B exist, and only B exists, where A and B may be singular or plural. The character "/" generally represents an "or" relationship between the associated objects.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized.

"A plurality of" in embodiments of this application indicates two or more. It should be noted that, in descriptions of embodiments of this application, the terms such as "first" and "second" are merely intended for distinction in description, but should not be construed as indicating or implying relative importance or indicating or implying a sequence.

In the following description, although numerous features may be designated as optional, it is nevertheless acknowledged that all features defined by the independent claims are not to be read as optional. The following first describes technical terms used in embodiments of this application

### (1) Large-screen terminal

In embodiments of this application, a large-screen terminal may include a terminal provided with a large screen, for example, an electronic device like a foldable screen terminal (for example, a foldable mobile phone), a tablet computer, or a foldable screen computer.

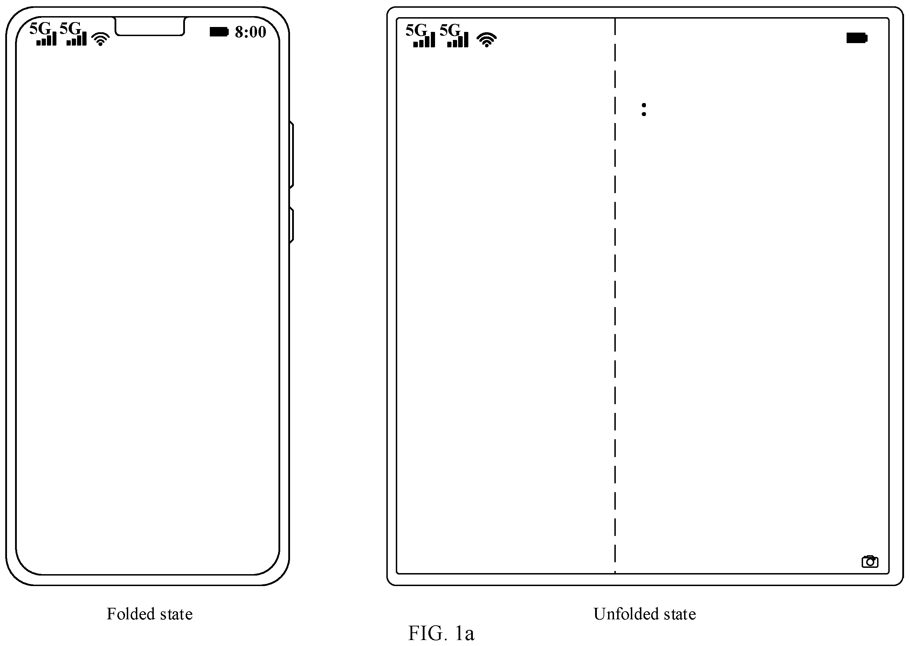

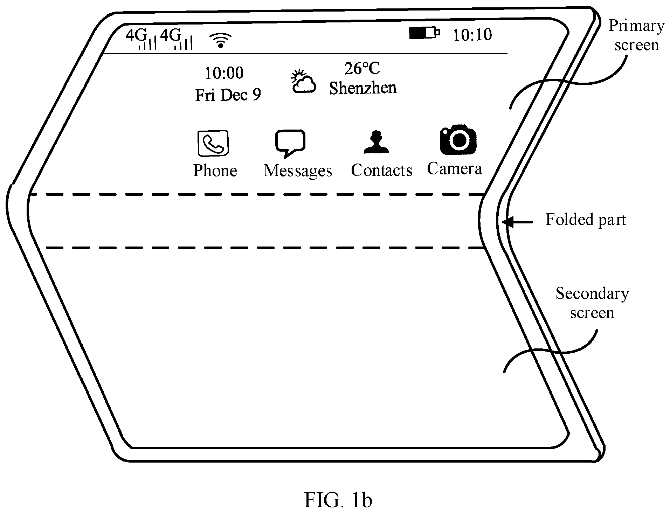

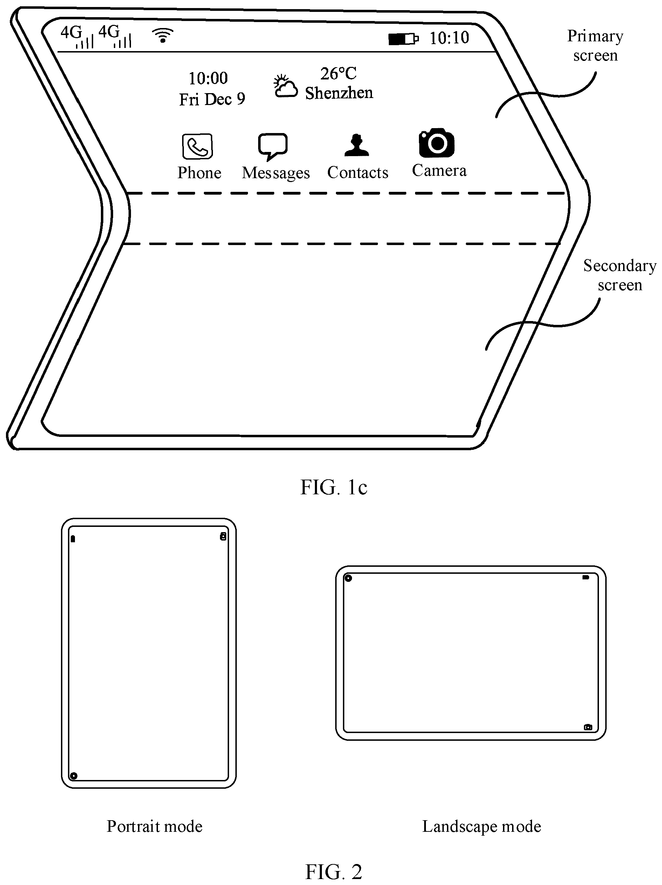

FIG. 1a is a diagram of an example of a foldable mobile phone. A screen of the foldable mobile phone can be folded at any angle within a range of 0 degrees to 180 degrees (a dashed line in the figure may indicate a foldable structure). When the screen is folded (referred to as a folded state), a screen size of the foldable mobile phone is equivalent to that of a conventional mobile phone. When the screen is unfolded (referred to as an unfolded state), a screen size of the foldable mobile phone is larger than that of a conventional mobile phone. In some possible cases, a width of a screen display region may be not less than 2000 pixels (px), to give a user experience of using a mobile phone and experience of using a tablet computer. The foldable mobile phone may be folded in two ways: folded outward and folded inward. As shown in FIG. 1b, after the screen is folded outward, flexible screens are far away from each other. As shown in FIG. 1c, after the screen is folded inward, flexible screens are opposite to each other. A foldable manner is not limited in this application, for example, another foldable form like a triple-screen form.

In some embodiments of this application, in a scenario in which a single application is displayed in full screen, optionally, a display mode of the application in the unfolded state of the foldable mobile phone is referred to as a large-screen display mode, and a display mode of the application in the folded state of the foldable mobile phone is referred to as a small-screen display mode.

FIG. 2 is a diagram of an example of a tablet computer. The tablet computer, also referred to as a portable computer (Tablet Personal Computer, Tablet PC), is a small and portable personal computer that uses a touch screen as a basic input device. The tablet computer has a large screen size and can switch between a landscape mode and a portrait mode. In the landscape mode, a width of a screen display region may be not less than 2000 px.

In embodiments of this application, a display status of the terminal includes a large-screen state and a small-screen state. In some examples, for the foldable mobile phone, the folded state is referred to as the small-screen state, and the unfolded state is referred to as the large-screen state. For another example, for the tablet computer, the portrait mode is referred to as the small-screen state, and the landscape mode is referred to as the large-screen state.

In some scenarios in embodiments of this application, in a scenario in which a single application is displayed in full screen, a display mode of the application in the large-screen state of the terminal is referred to as a large-screen display mode, and a display mode of the application in the small-screen state of the terminal is referred to as a small-screen display mode. For example, a display mode of the application displayed when the tablet computer is in the landscape mode is referred to as the large-screen display mode, and a display mode of the application displayed when the tablet computer is in the portrait mode is referred to as the small-screen display mode. For another example, a display mode of the application displayed when the foldable mobile phone is in the unfolded state is referred to as the large-screen display mode, and a display mode of the application displayed when the foldable mobile phone is in the folded state is referred to as the small-screen display mode. In other scenarios, for the foldable screen terminal, the entire screen or a part of the screen may be lit up. For example, the foldable screen terminal includes a foldable screen. The screen may be folded oppositely through a foldable structure (two folded parts of the screen are opposite to each other) or folded back-to-back (two folded parts of the screen are away from each other) through a foldable structure, or may be unfolded to form a large screen. When the screen is in an unfolded state, the entire screen may be lit up, or only a part of the screen may be lit up. When the entire screen is lit up, if a window size of an application is large (for example, a width is greater than a specified threshold), or the application is displayed in full screen, a display mode of the application is referred to as the large-screen display mode.

In some examples, if a window size of an application is large (for example, a width is greater than a specified threshold), or the application is displayed in full screen, a display mode of the application is referred to as the large-screen display mode.

In some examples, if a window size of an application is small (for example, a width is less than a specified threshold), a display mode of the application is referred to as the small-screen display mode.

It should be noted that, in some scenarios, when the terminal is currently in the large-screen state (for example, the foldable mobile phone is in the unfolded state, or the tablet computer is in the landscape mode), and multi-window display, for example, a split-screen mode or a picture-in-picture mode, is used, if a size of one window (for example, a split-screen window in the split-screen mode) meets a specified requirement (for example, a width is greater than a specified threshold), a display mode of the application is also considered as the large-screen display mode.

### (2) Controls

In computer programming, a control (or referred to as a component, an assembly, a widget, or a control) is a graphical user interface element, and arrangement of displayed information such as a window or a text box may be changed by a user. The control is a basic visual building block that is included in an application and controls all data processed by the application and an interaction operation about the data. Different combinations of controls are usually packaged in a component toolkit, and a programmer can build a graphical user interface (graphical user interface, GUI). Most operating systems include a set of controls for programming. The programmer can add these controls to the application and specify behavior of these controls. The control is usually defined as object-oriented programming (object-oriented programming, OOP) class. Therefore, many controls arise from class inheritance.

The Android (Android^{©}) system is used as an example. The following are examples of some typical controls provided by the system.

Linear layout (LinearLayout) control: The control is configured to: implement a linear layout and control horizontal or vertical arrangement of elements placed in the control.

List view (ListView) control: The control is configured to display elements (or referred to as objects, which may include texts and images) in a list. The control may be used to group elements into columns with or without column headers, and display accompanying icons and texts. The ListView control can be configured to organize list items (which be referred to as ListItem elements and may include texts and images) into one of four different views: 1. a large (standard) icon, 2. a small icon, 3. a list, and 4. a report. In addition, the control can manage a sorting method of elements in the list and an appearance of the selected elements.

Grid view (GridView) control: The control is configured to display elements (or referred to as objects, which may include texts and images) in a grid.

Recycler view (RecyclerView) control: The control can be configured to display elements (or referred to as objects, which may include texts and images) in a list or grid. Compared with the ListView control, the RecyclerView control has a more powerful element reuse mechanism, provides more layout managers (LayoutManager) to process a plurality of layouts, and can customize the layout manager to determine an item layout rule. For example, the RecyclerView control can provide the following layouts: 1. a linear layout similar to the ListView control, to implement an element layout in a horizontal or vertical list direction; 2. a grid layout, where a quantity of elements can be specified; and 3. a linear layout, where a list direction or a quantity of elements in a same direction can be specified.

View flipping (ViewPager) control: The control provides an effect of switching between a plurality of pages. This control is a container class to which another control can be added. A PagerAdapter class needs to provide data for the ViewPager control. An adapter (adapter) may be created to pad a plurality of views (views) for the control. When performing a leftward or rightward sliding operation, the user may switch between different views (view).

Image view (ImageView) control: The control is configured to display an image (a picture).

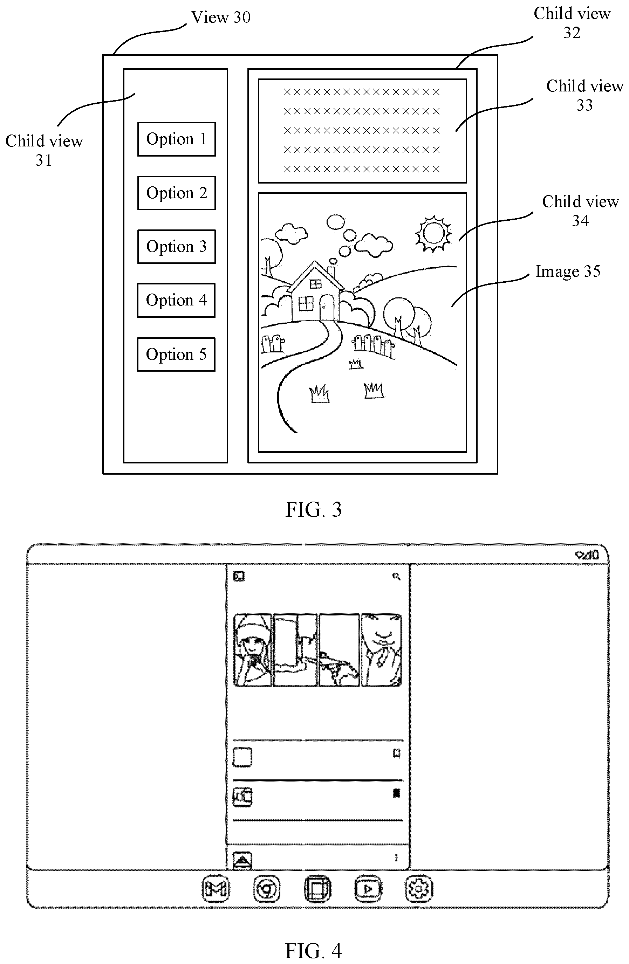

On a user interface, one or more controls may be used, or a control may be nested into a control, depending on a layout requirement. The following uses the LinearLayout control as an example for description with reference to FIG. 3. As shown in FIG. 3, a horizontally laid-out view 30 is first set by using the LinearLayout control, and the view 30 is a parent view. Two child views 31 and 32 whose heights are equal to a height of the parent view are set on the view 30 by using the LinearLayout control, and layout manners of the two child views are set to vertical arrangement. A child view 33 and a child view 34 are set on the child view 32 by using the LinearLayout control. The two views are arranged vertically above the parent view and have a same width as the parent view.

It should be noted that the foregoing is merely an example of nested use of a control. In another example, a control that implements a parent view and a control that implements a child view may alternatively be different types of controls. This is not limited in embodiments of this application.

### (3) Element and sub-element

A control is configured to lay out an element (or referred to as an object or data) on a user interface. In embodiments of this application, if the control is considered as a container, an object (for example, a text or an image) placed in the container is referred to as an element. Because controls can be nested in use, an element in a child control (or a child view) is called a sub-element relative to a parent control (or a parent view). FIG. 3 is still used as an example. An image 35 may be further set on the child view 34 by using the ImageView control. In this way, the image is an internal element of the ImageView control relative to the ImageView control, and is a sub-element inside the child view relative to the child view 34.

In embodiments of this application, several element types are defined, so that scaling processing is performed on elements of different types according to corresponding processing strategies. Optionally, in embodiments of this application, the element type may include a text and an image. Optionally, for an image type, subtype division may be performed on an image based on a size feature (for example, an aspect ratio) of the image.

For example, for the image, the following subtypes may be defined:
- Immersive large image: The following condition is met: image width = screen width. To be specific, if a width of the image is equal to a screen width, the image is an "immersive large image".
- Wide image: The following conditions are met: height ≤ width × α, and α > 1, for example, α = 1.2. To be specific, if a width of the image is greater than or equal to α times a height of the image, the image is a "wide image".
- Long image: The following conditions are met: height > width × β, and β > 1, for example, β = 1.2. To be specific, if a height of the image is greater than or equal to β times a width of the image, the image is a "long image".
- Small icon: The following condition is met: A width and a height are less than 50 dp. To be specific, if the width and the height of the image are less than 50 dp, the image is a "small icon".

It should be noted that the foregoing is merely an example of element type classification, and a manner of element type classification is not limited in embodiments of this application.

It should be noted that, in embodiments of this application, in some scenarios, a "scaling processing" operation performed on an element is specifically reducing a size of the element, and in some other scenarios, a "scaling processing" operation performed on an element is specifically increasing a size of the element.

For full-screen display of a single application, to be adaptive to a screen size, in some embodiments, the following manners may be used to perform adaptive interface adjustment: a mailbox mode and an adaptive layout (including a constraint layout (ConstraintLayout)).

Mailbox mode: If an application requests a fixed screen direction or a screen size is not adjustable, and a maximum aspect ratio or a minimum aspect ratio of the application is not compatible with an aspect ratio of a device screen, the application enters the mailbox mode. To be specific, a user interface of the application is displayed in the middle of the screen, and an unused screen region around the application is padded with a matte black border, as shown in FIG. 4. The application maintains a screen size of a small screen on a large screen, which causes most of the region on both sides of the screen to be wasted, and does not increase visible content of the application on the large screen.

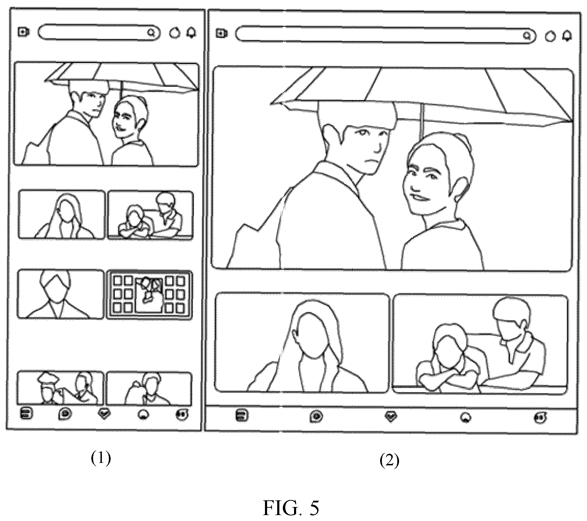

Constraint layout (ConstraintLayout): The layout is used to specify a location and a size of each view based on a spatial relationship between views in the layout. In this mode, at least one horizontal constraint and one vertical constraint are added to a view, and each constraint represents a connection or alignment manner between a view and another view, a parent layout, or an invisible guide line. In this way, when a screen size of a terminal changes, all views can be moved and stretched together. For example, in FIG. 5, an image (1) in FIG. 5 is a diagram of a user interface displayed by a foldable mobile phone in a folded state, and an image (2) in FIG. 5 is a diagram of a user interface displayed by the foldable mobile phone in an unfolded state. It can be learned that, for views on the user interface, horizontal and vertical location relationships between the views on a page are maintained, a layout relationship of a small screen is maintained on a large screen, but a dynamic size adjustment capability is not provided, all view size relationships are preset in advance, information displayed on the large screen is the same as that displayed on the small screen, and no more content is displayed on the large screen.

In the foregoing several adaptive interface adjustment solutions, compared with the small-screen display mode, no display content is added in the large-screen display mode. In some cases, an interface displayed on a large screen cannot adapt to a size of the large screen, resulting in a large quantity of blanks.

To adapt display of a user interface of an application to a large screen, embodiments of this application provide a display method and a related apparatus that can implement the method. In embodiments of this application, when an application is in the large-screen display mode, an element on a user interface of the application may be scaled, and the interface is re-laid out based on a size obtained through scaling the element, so that display of the user interface adapts to large-screen display. This improves user experience.

The display method provided in embodiments of this application may be applied to an electronic device, for example, a terminal with a large screen. For example, the display method may be applied to a large-screen device like a foldable screen terminal (for example, a foldable mobile phone) or a tablet computer.

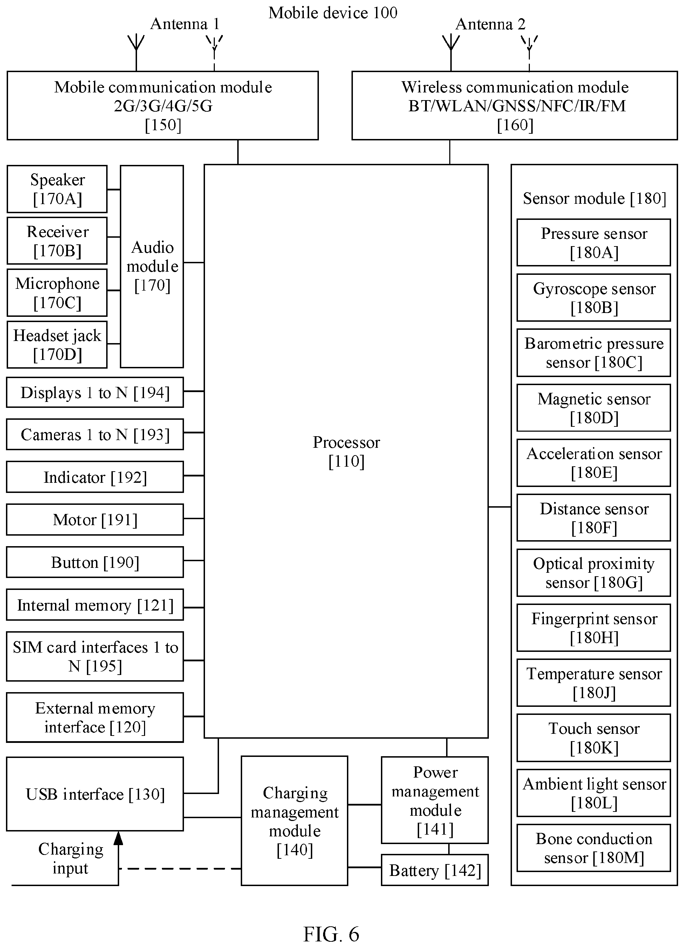

FIG. 6 is a diagram of an example of a structure of internal hardware of a terminal according to an embodiment of this application. In FIG. 6, a mobile device 100 (for example, a foldable mobile phone or a tablet computer) is used as an example for description. As shown in FIG. 6, the mobile device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like.

The sensor module 180 may include one or more of the following: a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application constitutes no specific limitation on the mobile device 100. In some other embodiments of this application, the mobile device 100 may include more or fewer components than those shown in the figure, or a combination of some components, or splits from some components, or a different component layout. The components shown in the figure may be implemented by hardware, software, or a combination of software and hardware.

The charging management module 140 is configured to receive a charging input from a charger. The power management module 141 is configured to connect to the battery 142, the charging management module 140, and the processor 110. A wireless communication function of the mobile device 100 may be implemented through the antenna 1, the antenna 2, the mobile communication module 150, the wireless communication module 160, a modem processor, a baseband processor, and the like.

The antenna 1 and the antenna 2 are configured to: transmit and receive electromagnetic wave signals. Each antenna in the mobile device 100 may be configured to cover one or more communication frequency bands. Different antennas may be further multiplexed, to improve antenna utilization. For example, the antenna 1 may be multiplexed as a diversity antenna of a wireless local area network. In some other embodiments, an antenna may be used in combination with a tuning switch.

The mobile communication module 150 may provide a wireless communication solution that is applied to the mobile device 100 and that includes a 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video on the display 194. In some embodiments, the modem processor may be an independent component. In some other embodiments, the modem processor may be independent of the processor 110, and is disposed in a same component as the mobile communication module 150 or another functional module.

The wireless communication module 160 may provide a wireless communication solution that is applied to the mobile device 100 and that includes a wireless local area network (wireless local area network, WLAN) (for example, a Wi-Fi network), Bluetooth (Bluetooth, BT), a global navigation satellite system (global navigation satellite system, GNSS), frequency modulation (frequency modulation, FM), a near field communication (near field communication, NFC) technology, or an infrared (infrared, IR) technology. The wireless communication module 160 may be one or more components integrating at least one communication processor module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, for the mobile device 100, the antenna 1 and the mobile communication module 150 are coupled, and the antenna 2 and the wireless communication module 160 are coupled, so that the mobile device 100 can communicate with a network and another device by using a wireless communications technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The mobile device 100 may implement a photographing function by using an ISP, the camera 193, a video codec, a GPU, the display 194, the application processor, and the like.

The external memory interface 120 may be configured to connect to an external storage card like a micro SD card, to extend a storage capability of the mobile device 100. The external memory card communicates with the processor 110 through the external memory interface 120, to implement a data storage function. For example, files such as music and videos are stored in the external storage card.

The mobile device 100 may implement audio functions, for example, music playing and recording, by using the audio module 170, the speaker 170A, the receiver 170B, the microphone 170C, the headset jack 170D, the application processor, and the like.

In embodiments of this application, when an application in the mobile device 100 is in a large-screen display mode, the processor 110 may scale an element on a user interface of the application, and re-lay out the interface, so that display of the user interface adapts to large-screen display. This improves user experience.

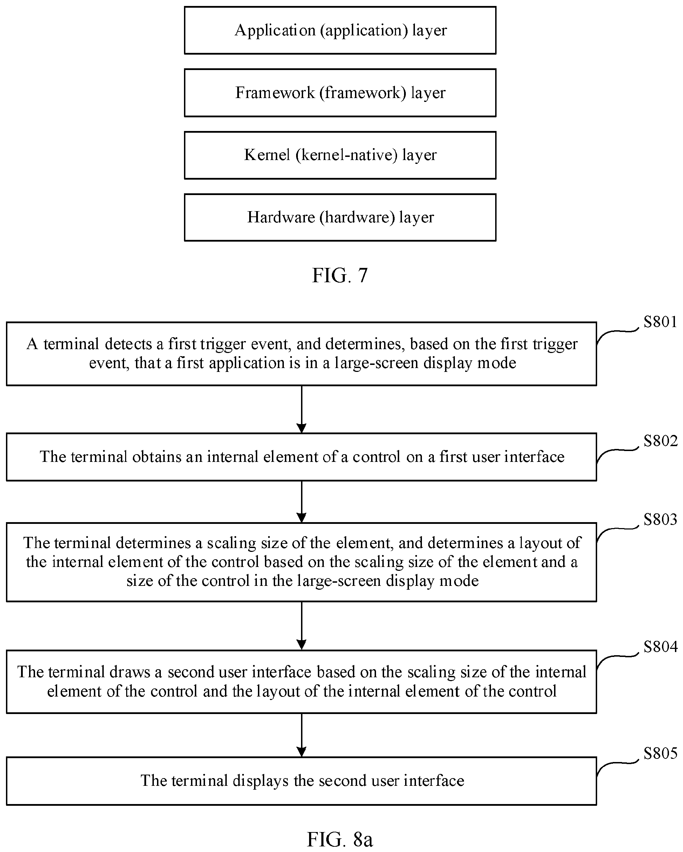

FIG. 7 is a diagram of an example of a software system architecture of a terminal according to an embodiment of this application. As shown in FIG. 7, a software structure of the terminal may be a layered architecture. For example, software may be divided into several layers, and each layer has a clear role and responsibility. The layers communicate with each other through a software interface. In some embodiments, the software system is divided into four layers: an application layer, an application framework (framework, FWK) layer, a system runtime (runtime) and system library, and a kernel layer from top to bottom.

The application layer may include a series of application packages. As shown in FIG. 7, the application layer may include Camera, Settings, a skin module, a user interface (user interface, UI), a third-party application, and the like. The third-party application may include WeChat, QQ, Gallery, Calendar, Phone, Map, Navigation, WLAN, Bluetooth, Music, Video, Messages, and the like.

In this embodiment of this application, a user interface of an application may be implemented by adjusting an element by a control. For example, when a foldable mobile phone switches from a folded state to an unfolded state or a tablet computer switches from a portrait mode to a landscape mode, an element on the user interface of the application is adjusted (for example, scaled) by using the control, and the interface is re-laid out, so that display of the user interface adapts to a large screen. This improves user experience.

The application framework layer provides an application programming interface (application programming interface, API) and a programming framework for an application at the application layer. The application framework layer may include some predefined functions. As shown in FIG. 7, the application framework layer may include a window manager, a content provider, a view system, a phone manager, a resource manager, a notification manager, and the like.

Android runtime includes a kernel library and a virtual machine. The Android runtime is responsible for scheduling and management of the Android system.

The core library includes two parts: a function that needs to be invoked in Java language, and a core library of Android. The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The kernel layer is a layer between hardware and software. The kernel layer includes at least a display driver, a camera driver, an audio driver, and a sensor driver.

A hardware layer may include various types of sensors, for example, a gyroscope sensor and a touch sensor in this embodiment of this application.

FIG. 8a is a schematic flowchart of an example of a display method according to an embodiment of this application. The procedure may be implemented by a terminal or an apparatus or a module that is configured to implement the display method in the terminal. The apparatus or module configured to implement the display method may be implemented in a software manner. In this procedure, a display mode of an application includes a large-screen display mode and a small-screen display mode.

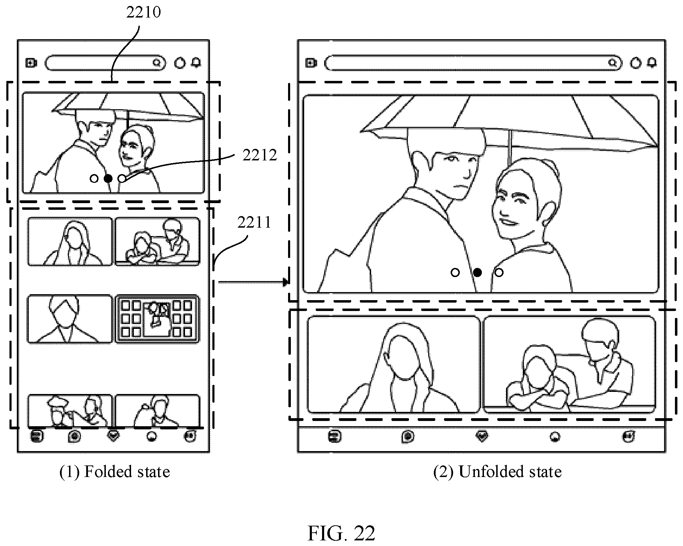

In embodiments of this application, for a first application, a native user interface of the application in the large-screen display mode is referred to as a first user interface. In other words, in embodiments of this application, a user interface that is generated in the large-screen display mode and that is not generated by using the method provided in embodiments of this application is referred to as the first user interface; or a user interface generated in a system default manner in the large-screen display mode is referred to as the first user interface. For example, a user interface displayed on the right in FIG. 5 is referred to as the first user interface. For another example, a user interface displayed on the right in FIG. 22 is the first user interface. In embodiments of this application, a user interface displayed by the application in the large-screen display mode by using the method provided in embodiments of this application is referred to as a second user interface.

A size of an element included on the first user interface is referred to as a first size, and a layout of the user interface (namely, a layout of the element on the user interface) is referred to as a first layout. A size of an element included on the second user interface is referred to as a second size, and a layout of the user interface is referred to as a second layout. It may be understood that the first size is a native size of the element in the large-screen display mode, and the second size is a size obtained by performing scaling processing on the element in the large-screen display mode by using a control provided in embodiments of this application. For example, for N (N is an integer greater than 1) images on the first user interface, sizes of the images are width × height = a × b (unit: pixel), a linear layout is used for the N images, and there are two images in one line. On the second user interface, sizes of the N images displayed on the second user interface are width × height = 0.25a × 0.25b (unit: pixel), a linear layout is used for the N images, and there are four images in one line.

In some examples, "element" in the following procedure may also be replaced with "sub-element."

As shown in FIG. 8a, the procedure may include the following steps.

S801: A terminal detects a first trigger event, and determines, based on the first trigger event, that a first application is in the large-screen display mode.

The first trigger event is used to trigger displaying of the first application in the large-screen display mode. It may be understood that displaying of the first application in the large-screen display mode means that a window size of the first application meets a specified requirement, for example, a window width is greater than or equal to a specified threshold. The specified threshold may be set based on a screen size corresponding to a case in which the terminal is in a large-screen state (for example, in an unfolded state of a foldable mobile phone or in a landscape mode of a tablet computer). For example, if a screen width of the terminal in the large-screen state is not less than 2000 px, the specified threshold may be set to 2000 px. In an example in which the first application is in the large-screen display mode, when the terminal is in the large-screen state, the first application is displayed in full screen. In another example in which the first application is in the large display mode, when the terminal is in the large-screen state and in a multi-window mode (for example, a split-screen mode or another type of multi-window mode), a width of a window in which the first application is located is greater than a specified threshold.

In an implementation, the first trigger event may be that the terminal switches from a small-screen state to the large-screen state. For example, if the terminal is a foldable mobile phone, the first trigger event is that a screen of the terminal switches from a folded state to an unfolded state. For another example, if the terminal is a tablet computer, the first trigger event is switching from a portrait mode to a landscape mode.

In another implementation, the first trigger event may be performing projection on the terminal, indicating that content displayed on a screen of the terminal is projected onto a large-screen device for display.

In another implementation, the first trigger event may be that an entire screen of the terminal is lit up. In some scenarios, for a foldable screen terminal, the entire screen or a part of the screen may be lit up. For example, the foldable screen terminal includes a foldable screen. The screen may be folded oppositely through a foldable structure (two folded parts of the screen are opposite to each other) or folded back-to-back (two folded parts of the screen are away from each other) through a foldable structure, or may be unfolded to form a large screen. When the screen is in an unfolded state, the entire screen may be lit up, or only a part of the screen may be lit up.

In another implementation, the first trigger event may be that a screen operation event of a user is detected when the first application is in the large-screen display mode. For example, it is detected that the user performs a sliding operation.

In another implementation, the first trigger event may be: When the first application is in the large-screen display mode, data of the first application is updated, and updated data needs to be displayed on a current user interface. For example, the first application is an online shopping application. If a status of one or more commodities displayed on a current user interface changes (for example, an inventory of the commodities changes from an abundant inventory to a tight inventory), the first trigger event occurs, and in this case, the status of the commodities on the current user interface needs to be updated. For another example, the first application is an online shopping application. If one or more commodities displayed on a current user interface are removed off shelves and deleted from a list of commodities, the first trigger event occurs, and in this case, the list of commodities on the current user interface needs to be updated.

In another implementation, the terminal is in the large-screen state, and is currently in a multi-window display mode. In the multi-window display mode, at least two windows are displayed on a screen of the terminal, and one of the at least two windows is used to display the first application. The first trigger event may be that when the terminal is in the large-screen state, if the multi-window display mode is canceled, for example, a split-screen mode is canceled, the first application is displayed in full screen.

In some examples, in this step, after the first trigger event occurs, it may be determined whether the first application is in the large-screen display mode. If the first application is in the large-screen display mode, a subsequent step of this procedure is performed; otherwise, this procedure may end. Further, after this procedure ends, processing may be performed in a common manner.

S802: The terminal obtains an internal element of a control on the first user interface.

In this step, optionally, starting from an upper part of the user interface, the terminal obtains controls and internal elements (or sub-elements) of the controls on the first user interface in a top-to-bottom order, and performs subsequent steps based on the obtained controls and the internal elements (or the sub-elements) of the controls. In this way, the user interface may be adjusted from a control on the upper part of the user interface. This can reduce a refresh operation on the user interface, and reduce or avoid screen flicker feeling from a perspective of user experience.

S803: The terminal determines a scaling size of the element, and determines a layout of the internal element of the control based on the scaling size of the element and a size of the control in the large-screen display mode.

A size of the control in the large-screen display mode includes a width and a height of the control in the large-screen display mode.

Optionally, in some scenarios in the large-screen display mode, the width of the control is associated with a screen width in the large-screen display mode, or the width of the control is determined based on a screen width in the large-screen display mode. For example, when the terminal is in the large-screen state, the first application is displayed in full screen. In this scenario, the width of the control is equivalent to the screen width, for example, the width of the control is equal to the screen width.

Optionally, in some scenarios in the large-screen display mode, the width of the control is associated with the window width of the first application, or the width of the control is determined based on the window width of the first application. For example, the terminal is in the large-screen state and in the multi-window mode. In this case, the window size of the first application is greater than the specified threshold, that is, the first application is in the large-screen display mode. In this scenario, the width of the control is equivalent to the window width of the first application, for example, the width of the control is equal to the window width of the first application.

Optionally, when the control is nested in a first control as a child control, the width of the control is associated with a scaling width that is of the child control and that is determined by the first control in the large-screen display mode; in other words, the width of the child control is determined based on the scaling width of the child control that is determined by the parent control of the child control in the large-screen display mode. To be specific, in the large-screen display mode, the parent control (the first control) determines the scaling size of the child control inside the parent control, so that scaling processing and layout can be performed on an internal element of the child control based on the width of the child control.

If a size before scaling is the first size, and a size after scaling is the second size, optionally, the second size is less than the first size, that is, the element is scaled down. For example, only a width of the element may be scaled down, or only a height of the element may be scaled down, or both a width and a height of the element may be scaled down. Optionally, in some other scenarios, the second size is greater than the first size, that is, the element is scaled up. For example, only a width of the element may be scaled up, or only a height of the element may be scaled up, or both a width and a height of the element may be scaled up. In some scenarios, sizes of all elements on the user interface are scaled down. In some other scenarios, sizes of only some elements on the user interface are scaled down, and sizes of other elements may remain unchanged, or may be scaled up. For example, an image of a larger size on the user interface may be scaled down, and a smaller icon may remain unchanged in size.

In an implementation, a scaling ratio of the second size relative to the first size is associated with a type of the element. For example, the terminal may obtain the type of the element, obtain, based on the type of the element, a scaling strategy corresponding to the type of the element, and determine the scaling size of the element based on the screen size in the large-screen display mode and the scaling strategy.

Optionally, a scaling strategy corresponding to each type of element may be preset. Optionally, scaling strategies corresponding to different types of elements may be the same or different. The corresponding scaling strategy is determined based on the type of the element, so that differentiated scaling processing can be performed on different types of elements based on display features of the different types of elements. In this way, the second user interface can better adapt to large-screen display.

Optionally, the type of the element may include a text type and an image type, to separately set different scaling strategies for a text and an image, so that the scaled-down element adapts to the large-screen display mode.

Optionally, if the element type is the image type, the image type may further include a plurality of subtypes. For example, subtype division may be performed based on an aspect ratio of the image, so that the subtype is associated with the aspect ratio of the image. For example, for the image type, subtypes corresponding to the image type may include: an immersive large image, a wide image, a long image, a small icon, and the like. For a division manner of the subtypes, refer to the foregoing embodiments.

For an image, the following provides an example of a scaling strategy corresponding to each subtype.
- If the image is an "immersive large image", a height of the image is adjusted to: height of a screen display region in the large-screen display mode × a1, or height of a window of an application in the large-screen display mode × a1, and a width of the image is adjusted proportionally, where a1 is greater than 0 and less than 1, for example, a1 = 0.25.
- If the image is a "wide image", a height of the image is adjusted to: height of a screen display region in the large-screen display mode × a2, or height of a window of an application in the large-screen display mode × a2, and a width of the image is adjusted proportionally, where a2 is greater than 0 and less than 1, for example, a2 = 0.2.
- If the image is a "long image", a height of the image is adjusted to: height of a screen display region in the large-screen display mode × a3, or height of a window of an application in the large-screen display mode × a3, and a width of the image is adjusted proportionally, where a3 is greater than 0 and less than 1, for example, a3 = 0.25.
- If the image is a "small icon", a height of the image is adjusted to: height of a screen display region in the large-screen display mode × a4, or height of a window of an application in the large-screen display mode × a4, and a width of the image is adjusted proportionally, where a4 is greater than 0 and less than 1, for example, a4 = 0.1.

For example, for a text, the following scaling strategy may be used. A height of the text is adjusted to: height of a screen display region in the large-screen display mode × a5, or height of a window of an application in the large-screen display mode × a5, where a5 is greater than 0 and less than 1, for example, a5 = 0.1.

It should be noted that the foregoing is merely an example of the scaling ratio, and the scaling ratio is not limited in embodiments of this application.

It should be further noted that, if controls are nested in use, for the outermost control, scaling processing may be performed on the element (or the sub-element) based on a screen size (or a size of a window of an application) in the large-screen display mode and a scaling strategy corresponding to a type of the element (sub-element). For an inner layer control, scaling processing may be performed on an element (or a sub-element) included in the inner layer control based on a size of the inner layer control and a scaling strategy corresponding to a type of the element (sub-element). The inner layer control is used as an internal element of an outer layer control, and a size of the inner layer control may be controlled by the outer layer control. For example, in the large-screen display mode, the outer layer control adjusts a size of the control nested in an inner layer based on a screen size, a type of an element accommodated in the control nested in the inner layer, and a corresponding scaling strategy.

In a possible implementation, a type of an element included in the control may be determined based on a control type (for example, whether the element type is an image or a text is determined). For example, the control type may be obtained by invoking a function for obtaining the control type. For example, if the control type is ImageView, it may be determined that the element in the control is an image; or if the control type is Text View, it may be determined that the element in the control is a text. It should be noted that the foregoing is merely an example of a method for determining the element type. The method for determining the element type is not limited in embodiments of this application.

Optionally, in embodiments of this application, a scaling ratio of a width of the element before scaling to that of the element after scaling is equal to a scaling ratio of a height of the element before scaling to that of the element after scaling. In other words, in embodiments of this application, a size of the element may be adjusted in a proportional scaling manner, to ensure that an aspect ratio of the scaled element is the same as that before scaling processing, to reduce or avoid element deformation. This further ensures user experience.

In an implementation, for a control used to implement page flipping display (to be specific, an internal element of the control may be displayed in a page flipping mode by using the control), a scaling size of the element can be determined based on a display effect of the control in the large-screen display mode, a screen size (for example, a screen display width in the large-screen state) or a size of a window of an application in the large-screen display mode, and a quantity of elements included within the control. Based on the foregoing implementation, for the control for page flipping display, a quantity of elements displayed in the control on the second user interface and a scaling size of the elements can be dynamically determined based on a page flipping display effect required in the large-screen mode, so that display of the control adapts to the large-screen mode. This feature improves user experience.

For example, for the control configured to implement page flipping display, a method for adjusting an element size may include the following steps: determining a second size (namely, a size after scaling) of each element based on the quantity of elements included in the control, a size of a page flipping region in the large-screen display mode, and a page flipping display effect (for example, a quantity of elements displayed, and a size and distribution of the elements) of the control on the second user interface; and scaling each element based on the second size of each element. The size of the page flipping region in the large-screen display mode may be a width of the page flipping region in the large-screen mode. For example, the width of the page flipping region in the large-screen mode may be equivalent to a screen width (for example, in a case of a full-screen display mode) or less than a screen width (for example, in the case of a multi-window display mode).

For example, different scaling processing methods are used based on different quantities of elements in the control. For example, the following cases may be included:
Case 1: If the page flipping display effect in the large-screen display mode is that when a quantity of internal elements of the control is greater than or equal to 3, a current element is completely displayed, and a previous element and a next element are partially displayed, a possible scaling manner is as follows:
A scaling size (or a scaling ratio) of the element in the control is determined based on a width of a screen display region of a terminal in the large-screen state and a required page flipping display effect, so that a scaled element can be completely displayed in the page flipping display region in the large-screen display mode, and two elements can be respectively partially displayed in locations (for example, left and right sides or upper and lower sides) adjacent to the element. Optionally, partial display may be displaying x% of an area of the scaled element, where x is greater than 0 and less than 1, for example, x% = 50%.

Optionally, if a quantity of internal elements of the control is greater than 3, a navigation identifier may be further displayed in a page flipping display region in the large-screen display mode, to guide the user to perform page flipping based on a screen operation (for example, sliding left and right or sliding up and down).
Case 2: If the page flipping display effect in the large-screen display mode is that there are two elements and the two elements are completely displayed, a possible scaling manner is as follows:
A scaling size (or a scaling ratio) of the internal element of the control is determined based on a width of a screen display region of a terminal in the large-screen state and a required page flipping display effect, so that the two scaled elements can be completely displayed in the page flipping display region in the large-screen display mode. Optionally, the two scaled elements may be uniformly distributed in the page flipping display region in the large-screen display mode.

Case 3: If the page flipping display effect in the large-screen display mode is that the control has one internal element and the element is completely displayed, a possible scaling manner is as follows:

A scaling size (or a scaling ratio) of the internal element of the control is determined based on a width of a screen display region of a terminal in the large-screen state and a required page flipping display effect, so that the scaled element can be completely displayed in the page flipping display region in the large-screen display mode. Optionally, the scaled element may be distributed in the center of the page flipping display region in the large-screen display mode.

Optionally, before the scaling size of the element is determined, the procedure may further include the following step: determining whether the internal element of the control meets a specified requirement. In S803 of the foregoing procedure, if the element meets the specified requirement, the scaling size of the element is determined, and a subsequent processing process is performed; otherwise, scaling processing on the element may be abandoned.

Optionally, in some implementations, it is considered that the element meets the specified requirement in the following case: A size of the element is greater than a specified threshold (for example, a width of the element is greater than a width threshold and/or a height of the element is greater than a height threshold). Optionally, in some other implementations, it is considered that the element meets the specified requirement in the following case: A type of the element is a specified type (for example, the element is of the image type). Optionally, in some other implementations, it is considered that the element meets the specified requirement in the following case: A size of the element is greater than a specified threshold, and a type of the element is a specified type.

In the foregoing implementation, only an element that meets the specified requirement may be scaled, and an element that does not meet the requirement may not be scaled, so that the second user interface can adapt to the large-screen mode. For example, if the size of the element is large (for example, the width of the element is greater than the width threshold and/or the height of the element is greater than the height threshold), the element needs to be scaled down. If the size of the element is small (for example, the width of the element is less than or equal to the width threshold and/or the height of the element is less than or equal to the height threshold), the element does not need to be scaled down, so that the internal element of the control can adapt to the large-screen mode. This improves viewing experience of the user.

Optionally, before the scaling size of the element is determined, the procedure may further include the following step: determining whether a size of the internal element of the control is less than or equal to a specified threshold, for example, determining whether a width of the element is less than or equal to a width threshold, determining whether a height of the element is less than or equal to a height threshold, or determining whether a width of the element is less than or equal to a width threshold and a height of the element is less than or equal to a height threshold. In S803 of the foregoing procedure, if the size of the element is less than or equal to the specified threshold, it is determined to scale up the element, and a scaling size of the element is determined based on the specified threshold, where a size, obtained through scaling up based on the scaling size, of the element is not less than a size corresponding to the specified threshold. If the size of the element is greater than the specified threshold, the element may be scaled down according to the foregoing method. Optionally, the width threshold is the same as or different from the height threshold.

In the foregoing implementation, when the size of the element is small (for example, the width of the element is less than or equal to the width threshold and/or the height of the element is less than or equal to the height threshold), the element can be scaled up to a size equivalent to the threshold. When the size of the element is large (for example, the width of the element is greater than the width threshold and/or the height of the element is greater than the height threshold), the element can be scaled down, so that the internal element of the control can adapt to the large-screen mode. This improves viewing experience of the user.

Optionally, after the scaling size of the element is determined, the procedure may further include the following step: determining whether the scaling size of the element is less than or equal to a specified threshold, for example, determining whether a width of the element is less than or equal to a width threshold, determining whether a height of the element is less than or equal to a height threshold, or determining whether a width of the element is less than or equal to a width threshold and a height of the element is less than or equal to a height threshold. If the scaling size of the element is less than or equal to the specified threshold, scaling on the element may be abandoned, or the scaling size of the element may be determined based on the specified threshold, so that a size, obtained through scaling based on the scaling size, of the element is not less than the specified threshold.

In the foregoing implementation, after the scaling size of the element is determined, if the scaling size is small (for example, a width of the scaled-down element is less than or equal to the width threshold and/or a height of the scaled-down element is less than or equal to the height threshold), scaling on the element may be abandoned, or the scaling size of the element may be re-determined based on the specified threshold, so that a size of the scaled element may be equivalent to a size corresponding to the specified threshold (for example, a width of the scaled-up element is equal to the width threshold and/or a height of the scaled-up element is same as the height threshold), and the internal element of the control can adapt to the large-screen mode. This feature improves user experience.

S804: The terminal draws the second user interface based on the scaling size of the internal element of the control and the layout of the internal element of the control.

For example, in this step, the terminal may draw the second user interface based on the width and the height of the internal element of the control and the layout of the element.

Optionally, if the user interface of the first application includes a plurality of controls, when the terminal draws the second user interface, the terminal may perform drawing operations on the controls based on scaling sizes of internal elements of the controls and layouts of the internal elements of the controls, to obtain the second user interface.

Optionally, in the large-screen display mode, when the terminal detects a user operation, the terminal may refresh the user interface of the first application based on the user operation. Optionally, the user operation may be a slide-up user operation, a slide-up user operation, or another user operation that can trigger refreshing of the user interface.

For example, a process of refreshing the user interface of the first application based on the user operation may include: determining a target location of the user interface of the first application based on the user operation, obtaining the internal element of the control on the first user interface based on the target location, determining the layout of the internal element of the control based on the scaling size of the element and the size of the control in the large-screen display mode, and drawing, based on the scaling size of the internal element of the control and the layout of the internal element of the control, the second user interface corresponding to the target location. For specific implementations of performing scaling processing and layout on the element in the refresh process, refer to related steps in the foregoing procedure.

S805: The terminal displays the second user interface.

Optionally, because elements on the first user interface are scaled and re-laid out, in some scenarios, a quantity of elements on the second user interface is greater than a quantity of elements on the first user interface, so that the second user interface is more suitable for large-screen display than the first user interface.

Optionally, an example in which the quantity of elements on the second user interface is greater than the quantity of elements on the first user interface is that a quantity of columns of elements on the second user interface is greater than a quantity of columns of elements on the first user interface. For example, a quantity of columns of elements may be increased from 2 to 4 by scaling sizes of the elements and re-laying out the elements.

Optionally, an example in which the quantity of elements on the second user interface is greater than the quantity of elements on the first user interface is that a quantity of at least one row of elements on the second user interface is greater than a quantity of one row of elements on the first user interface. For example, a quantity of each row of elements may be increased from 2 to 4 by scaling sizes of the elements and re-laying out the elements. Because a quantity of columns of elements on the second user interface is more than a quantity of columns of elements on the first user interface, the second user interface is more suitable for large-screen display than the first user interface.

Optionally, an example in which the quantity of elements on the second user interface is greater than the quantity of elements on the first user interface is that a quantity of elements in a page flipping display region on the second user interface is greater than a quantity of elements in a page flipping display region on the first user interface. For example, the first layout on the first user interface includes a first page flipping display region, and the first page flipping display region includes a first element of a first size. The second layout on the second user interface includes a second page flipping display region, and the second page flipping display region includes a first element of a second size, a second element of a second size, and a third element of a second size. The second element is a previous element (or a previous page) for the first element, and the third element is a next element (or a next page) for the first element. The first element of the second size is completely displayed, and the second element of the second size and the third element of the second size are respectively adjacent to the first element of the second size, and are partially displayed (for example, only 50% of a region is displayed). Because a quantity of elements in the page flipping display region on the second user interface is more than a quantity of elements in the page flipping display region on the first user interface, the second user interface is more suitable for large-screen display than the first user interface.

Optionally, a possible display effect of the second user interface is setting, in an image display region, a background image for a scaled image. For example, the first layout includes a first image display region, and the first image display region includes a first image of a first size. The second layout includes a second image display region, and the second image display region includes a background image and a first image of a second size. The background image is an image on which blurring processing is performed, and a dominant color of the background image is the same as or close to a dominant color of the first image. Because the first image of the second size and a background image of the image are displayed in the picture display region on the second user interface, the background image is the image on which blurring processing is performed, and the dominant color is the same as or similar to the dominant color of the first image, aesthetics can be increased, so that the second user interface can adapt to large-screen display. This improves user experience.

In the procedure shown in FIG. 8a, when the first trigger event occurs and the first application is in the large-screen display mode, scaling processing is performed based on a size of an element on the first application interface, re-layout is performed to obtain the second user interface, and the second user interface is displayed. In this way, the second user interface adapts to large-screen display.

In a possible implementation of this application, in the foregoing procedure, the terminal determines the scaling size and the layout of the internal element of the control (for example, including a quantity of rows of elements and a spacing between the rows), and then determines a height of the control based on the scaling size of the internal element of the control and the layout of the internal element of the control, so as to subsequently draw the control on the user interface. This method is applicable to a scenario in which the height of the control is not dynamic.

In a possible implementation of this application, before it is determined, based on the first trigger event, that the first application is in the large-screen display mode, the method further includes the following step: The terminal determines whether the first application is allowed to perform user interface adjustment in the large-screen display mode. Correspondingly, if the first application is allowed to perform user interface adjustment in the large-screen display mode, subsequent steps in the foregoing procedure are performed (for example, including a step of determining that the first application is in the large-screen display mode, and a subsequent step). Otherwise, user interface adjustment is not performed in a manner in this embodiment of this application.

For example, an application list may be preset. The application list includes at least one application (for example, the list includes information such as an identifier of an application), and an application in the list is allowed to perform user interface adjustment in the large-screen display mode. After detecting the first trigger event, the terminal may obtain information (for example, an identifier of an application) about an application currently running in the foreground, and query the list based on the information about the application. If the application is in the list, a subsequent step in the foregoing procedure in this embodiment of this application is performed, to perform user interface adjustment on the user interface, so that the user interface adapts to the large-screen display mode.

In the foregoing implementation, for an application on which user interface adjustment is allowed to be performed in only the large-screen display mode, when a user interface of the application needs to be displayed in the large-screen display mode, the user interface of the application may be adjusted in the large-screen display mode, so that system flexibility can be improved and different needs of the user can be met.

In some scenarios, the user interface of the first application includes a pop-up window. The pop-up window is a window that automatically pops up when an application is running. The user interface is located at an original layer, but the pop-up window is drawn at an upper layer. If the pop-up window is displayed in a small window, the pop-up window partially blocks the user interface at a lower layer. The pop-up window can also be displayed in full screen.

If the user interface includes a pop-up window, in some embodiments of this application, when the first application is in the large-screen display mode, a location and a size of the pop-up window may be adjusted to adapt to the large-screen display mode.

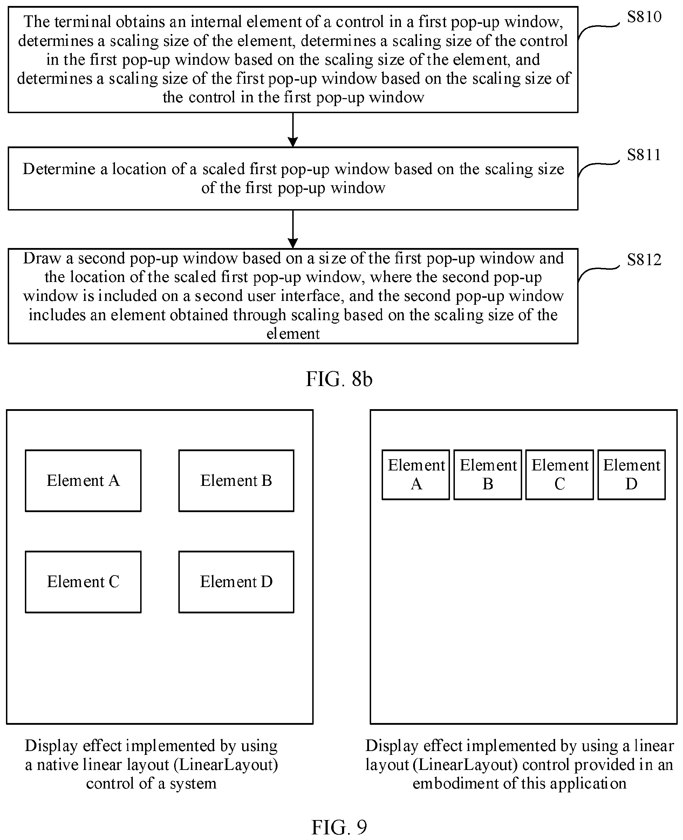

In a possible implementation, when the terminal detects the first trigger event, and determines, based on the first trigger event, that the first application is in the large-screen display mode, if the user interface of the first application includes a first pop-up window, in this embodiment of this application, a location and a size of the pop-up window may be adjusted by using a method shown in FIG. 8b.

S810: The terminal obtains an internal element of a control in the first pop-up window, determines a scaling size of the element, determines a scaling size of the control in the first pop-up window based on the scaling size of the element, and determines a scaling size of the first pop-up window based on the scaling size of the control in the first pop-up window.

Optionally, for a specific implementation of determining the scaling size of the internal element of the control in the first pop-up window, refer to related content of determining the scaling size of the element in the foregoing example.

After the scaling size of the element is determined, the scaling size of the control may be determined based on the scaling size of the internal element of the control, for example, a width and/or a height of the control. The scaling size of the first pop-up window may be determined based on the size of the control in the first pop-up window. For example, the first pop-up window includes an ImageView control. The terminal may determine a scaling size of an image in the ImageView control based on a subtype of the image and a corresponding scaling strategy, and determine a scaling size of the ImageView control based on the scaling size of the image, so that a size of the scaled ImageView control is equivalent to a size of the scaled image. Then, the terminal may determine a scaling size of the first pop-up window based on the scaling size of the ImageView control, so that a size of the scaled first pop-up window is equivalent to the size of the scaled ImageView control.

S811: Determine a location of a scaled first pop-up window based on the scaling size of the first pop-up window.

Optionally, the location of the scaled first pop-up window may be determined by using the following method: obtaining a location of the first pop-up window on the first user interface, determining coordinates of a center point of the first pop-up window based on the location, and determining coordinates of the location of the scaled first pop-up window based on the scaling size of the first pop-up window and the coordinates of the center point. In this way, a relative location of the center point of the first pop-up window remains unchanged before and after the first pop-up window is scaled.

It should be noted that the location of the scaled first pop-up window may alternatively be determined by using another method. This is not limited in embodiments of this application.

S812: Draw a second pop-up window based on a size of the first pop-up window and the location of the scaled first pop-up window, where the second pop-up window is included on the second user interface, and the second pop-up window includes an element obtained through scaling based on the scaling size of the element.

For example, a layer at which the second pop-up window is located may be a top layer, to ensure that the second pop-up window is not blocked.

For example, the foregoing procedure may be applied to the following scenarios:
Scenario 1: When the first application is already in the large-screen display mode, the first application currently displays a pop-up window. In this scenario, for the currently displayed pop-up window, a scaled pop-up window may be displayed by using a procedure shown in FIG. 8b.

Scenario 2: The user interface of the first application already includes a pop-up window, and the first application switches from the small-screen display mode to the large-screen display mode. In this scenario, a procedure in which the user interface of the first application is adjusted to adapt to the large-screen display mode includes a procedure shown in FIG. 8a and a procedure shown in FIG. 8b.

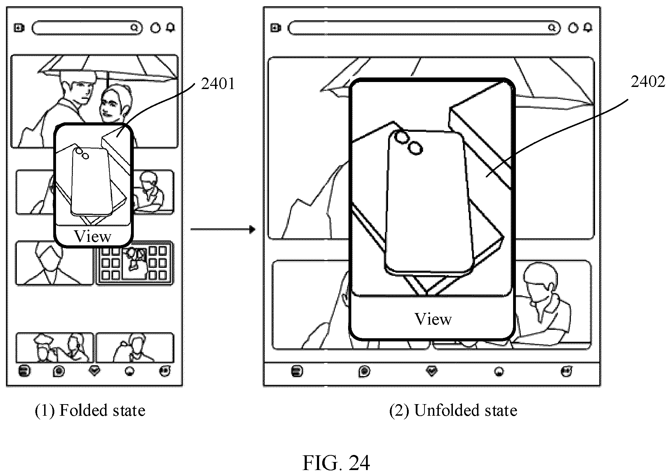

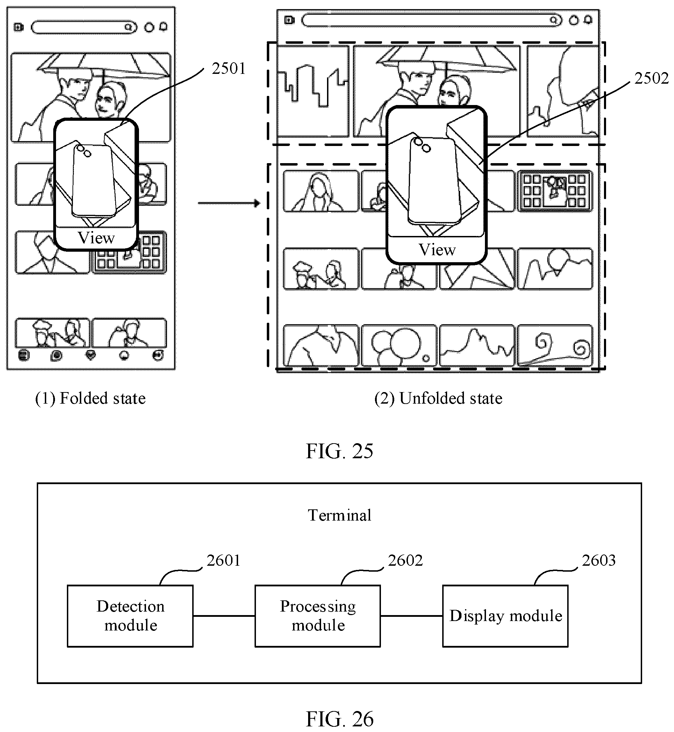

Based on the foregoing procedures shown in FIG. 8a and FIG. 8b, a foldable mobile phone is used as an example. FIG. 24 and FIG. 25 are examples of comparison between effects obtained before and after embodiments of this application are used.

Refer to FIG. 24. (1) on the left side of FIG. 24 shows a user interface of an application displayed on a screen of the foldable mobile phone when the mobile phone is in a folded state. The user interface includes a pop-up window 2401, and the pop-up window 2401 is implemented by a native ImageView control of a system.

After the foldable mobile phone switches from the folded state to an unfolded state, the user interface may be shown in (2) on the right side of FIG. 24. It can be learned that, when the foldable mobile phone switches from the folded state to the unfolded state without using this embodiment of this application (for example, using a native control of the system), a size of a pop-up window 2402 on the user interface on the large screen is large, and the user interface does not adapt to large-screen display.

Refer to FIG. 25. (1) on the left side of FIG. 25 shows a user interface of an application displayed on a screen of the foldable mobile phone when the mobile phone is in a folded state. The user interface includes a pop-up window 2501, and the pop-up window 2501 is implemented by the ImageView control provided in this embodiment of this application.

After the foldable mobile phone switches from the folded state to an unfolded state, the user interface may be shown in (2) on the right side of FIG. 25. It can be learned that, when this embodiment of this application is used (that is, when the control provided in this embodiment of this application is used), the foldable mobile phone switches from the folded state to the unfolded state. In this case, compared with the pop-up window 2402 in FIG. 24, a size of the pop-up window 2502 on the user interface on the large screen adapts to current large-screen display in the unfolded state.

In some embodiments of this application, a large-screen display adaptation problem may be resolved by using a control with an extended function. The control with the extended function has a function (for example, setting a location, a layout, a display effect, and the like of an element) of the native control of the system and an extended function in this application. The extended function may include a capability of adjusting the user interface in response to the first trigger event, so that an adjusted user interface adapts to large-screen display.

Optionally, a function of the native control may be enhanced, so that the native control has an extended function. The Android (Android^{©}) system is used as an example. In some embodiments of this application, function enhancement is performed by using an Android (Android^{©}) native control, so that the control has a function of perceiving the first trigger event, and can perform a response operation on the perceived first trigger event. Based on the response operation, adaptive large-screen display adjustment for a display size, a layout, and the like can be performed on an internal element (or a sub-element) of the control, so as to adapt to large-screen display. In this embodiment of this application, a control having the foregoing functions may be released to a public platform after being developed, so that an application developer can obtain the control, and can program a user interface of an application by using the control in an application development process.

Optionally, the control provided in this embodiment of this application may perceive the first trigger event, and may adjust a size and a layout of an internal element of the control independently of another control, so as to adapt to large-screen display. For example, the first application includes a first control, and the first control includes a first element (there may be one or more first elements). The first control is configured to: in response to the first trigger event, detect that the first application is in a large-screen display mode; adjust the first element in the first control from a first size to a second size; and adjust a layout of the first element in the first control from a first layout to a second layout.

Optionally, the Android (Android^{©}) system is used as an example. The control provided in this embodiment of this application may include one or more of the following: a linear layout control (referred to as a LinearLayout control below), a recycler view control (referred to as a RecyclerView control below), a view flipping control (referred to as a ViewPager control below), a list view control (referred to as a ListView control below), a grid view control (referred to as a GridView control below), and an image view control (referred to as an ImageView control below).

The following describes these controls.

### (1) LinearLayout control

The LinearLayout control may determine a scaling size of an internal element (for example, a corresponding scaling strategy may be obtained based on a type of the element, and the scaling size of the element may be determined according to the scaling strategy) if it is determined, based on the first trigger event, that the first application is in the large-screen display mode, and determine a linear layout (also known as a linear layout) of the internal element based on the scaling size (for example, a scaling width) of the internal element and a size of the control in the large-screen mode (for example, a width of the control in the large-screen display mode).

During development of a user interface, the LinearLayout control can be used to lay out a fixed quantity of elements (or sub-elements). For example, if the user interface includes four text display regions for displaying a fixed text, the LinearLayout control may be used to design layouts of the four text display regions.

Optionally, a function of a native LinearLayout control of a system may be enhanced, and a function of adjusting a display size, a layout, or the like of an internal element (a sub-element) of the control based on the perceived first trigger event to adapt to large-screen display may be added, so as to obtain the LinearLayout control in this embodiment of this application.

FIG. 9 is a diagram of an example of comparison between an adaptive large-screen display adjustment effect obtained by using a native LinearLayout control of a system and an adaptive large-screen display adjustment effect obtained by using a LinearLayout control provided in an embodiment of this application. As shown in the figure, also in the large-screen display mode (to be specific, a size of a large screen displayed when the native control of the system is used is the same as a size of the large screen displayed when the control provided in this embodiment of this application is used), because of the LinearLayout control provided in this embodiment of this application, sizes of four internal elements (or sub-elements) of the control may be scaled based on a size of the current large screen, and layouts of the four elements (or the sub-elements) may be adjusted based on a horizontal layout, for example, the four elements (or the sub-elements) are sequentially arranged in one line. Optionally, if there are a large quantity of elements, and these elements cannot be arranged one line, line breaking may be performed until all elements (or sub-elements) are arranged.

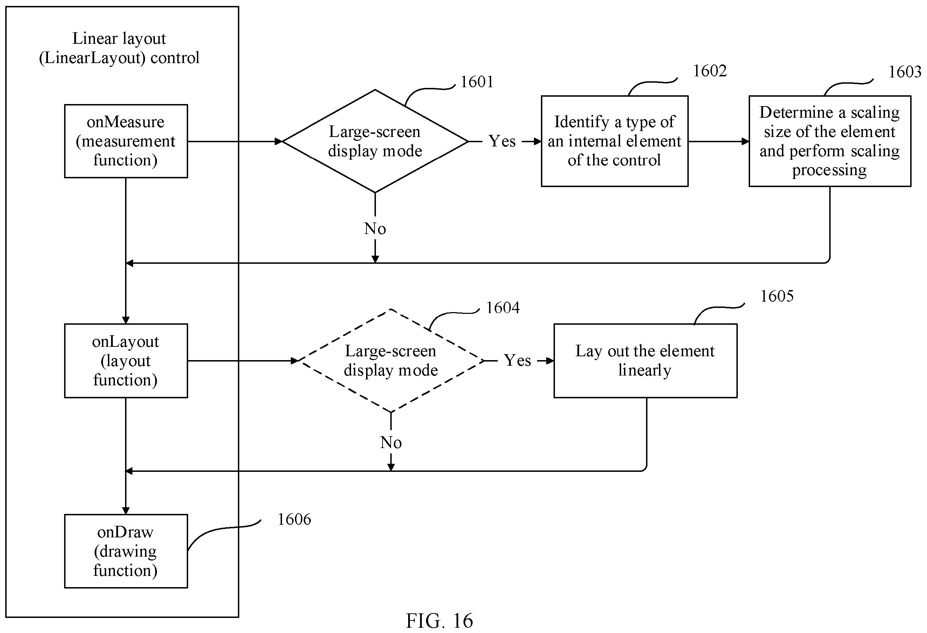

In some embodiments, an adjustment process of the LinearLayout control may be associated with FIG. 16.

### (2) RecyclerView control

The RecyclerView control may determine a scaling size of an internal element (for example, a corresponding scaling strategy may be obtained based on a type of the element, and the scaling size of the element may be determined according to the scaling strategy) if it is determined, based on the first trigger event, that the first application is in the large-screen display mode, and determine a quantity of columns of internal elements and a spacing between the columns based on the scaling size (for example, a scaling width) of the internal element and a size of the control in the large-screen display mode (for example, a width of the control in the large-screen display mode), to extend the quantity of columns.

During development of a user interface, the RecyclerView control can be used to lay out a dynamic element (or a sub-element). For example, a commodity search result interface of a network shopping application includes several commodity display regions, and a quantity of commodity display regions included in a search result page may be different based on different searched commodities. In this case, the RecyclerView control may be used to design a layout of the commodity display region.

Optionally, a function of a native RecyclerView control of a system may be enhanced, and a function of adjusting a display size or a layout of an internal element (a sub-element) of the control based on the perceived first trigger event to adapt to large-screen display may be added, so as to obtain the RecyclerView control in this embodiment of this application.

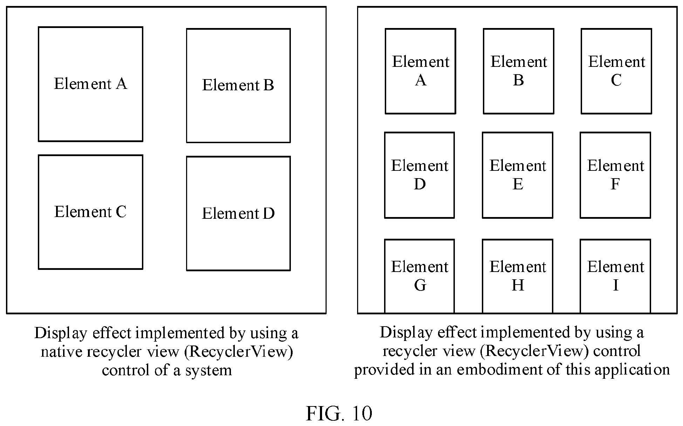

FIG. 10 is a diagram of an example of comparison between an adaptive large-screen display adjustment effect obtained by using a native RecyclerView control of a system and an adaptive large-screen display adjustment effect obtained by using a RecyclerView control provided in an embodiment of this application. As shown in the figure, also in the large-screen display mode (to be specific, a size of a large screen displayed when the native control of the system is used is the same as a size of a large screen displayed when the control provided in this embodiment of this application is used), because of the RecyclerView control provided in this embodiment of this application, sizes of internal elements (or sub-elements) of the control may be scaled down based on a size of the current large screen, and a quantity of columns of scaled-down elements (or scaled-down sub-elements) is determined based on sizes of the scaled-down elements. In this case, the quantity of columns of scaled-down elements (sub-elements) increases, so that more elements (sub-elements) can be displayed.

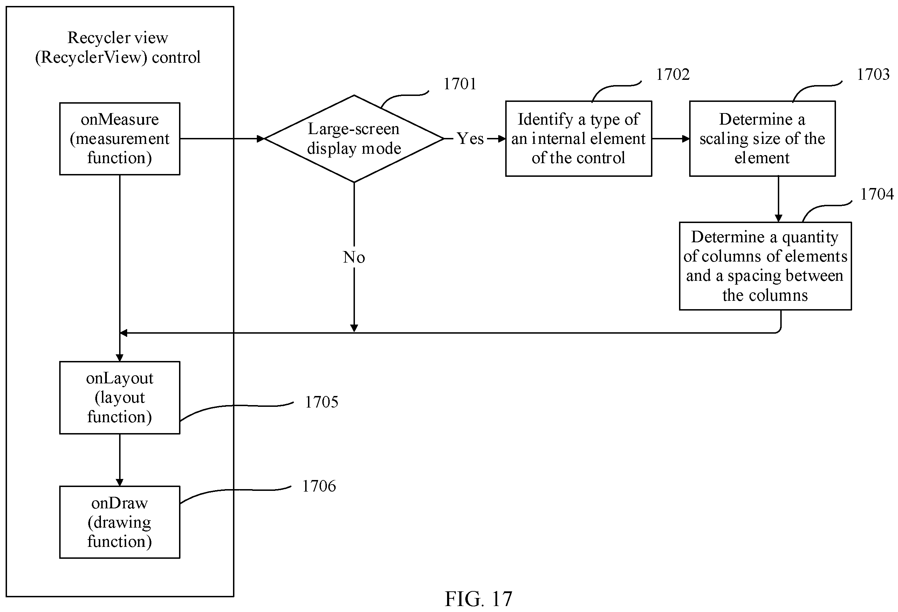

In some embodiments, an adjustment process of the RecyclerView control may be associated with FIG. 17.

### (3) ViewPager control

The ViewPager control may determine a scaling size of an internal element (for example, a quantity of internal elements of the control and a scaling size of each element may be determined based on a size of the control in the large-screen display mode, a quantity of internal elements, and a display effect of the control in the large-screen display mode) if it is determined, based on the first trigger event, that the first application is in the large-screen display mode, and determine a layout of the internal element based on the quantity of internal elements of the control, the scaling size of each element, and the size and display effect of the control in the large-screen display mode.

A current page, a partial previous page, and a partial next page can be displayed at the same time by using the control. During development of a user interface, the ViewPager control can be used to implement switching between a plurality of pages, for example, switching between different views (view) by sliding left or right.

Optionally, a function of a native ViewPager control of a system may be enhanced, and a function of adjusting a display size, a layout, or the like of an internal element (a sub-element) of the control based on the perceived first trigger event to adapt to large-screen display may be added, so as to obtain the ViewPager control in this embodiment of this application.

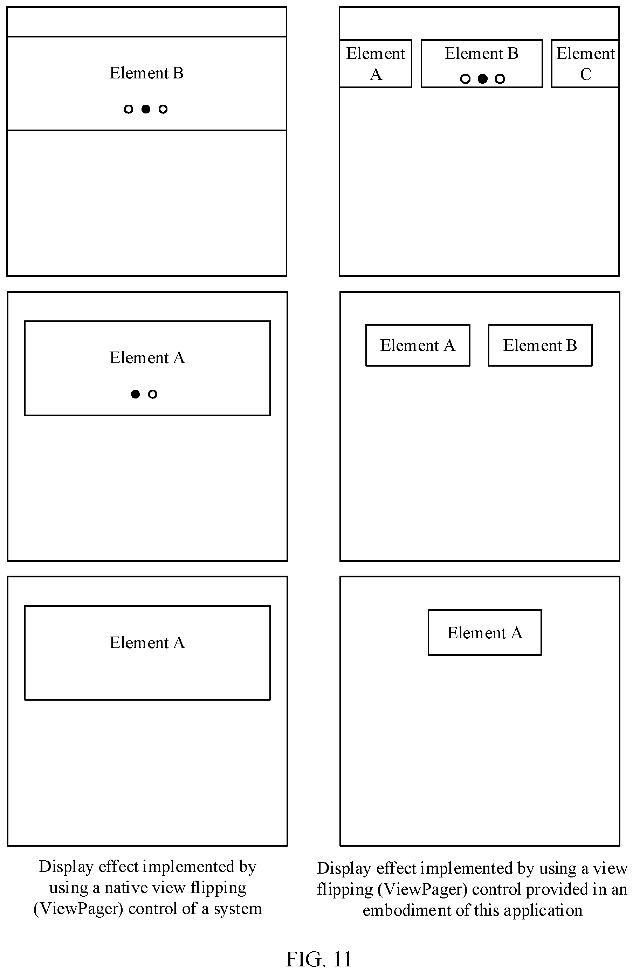

FIG. 11 is a diagram of an example of comparison between an adaptive large-screen display adjustment effect obtained by using a native ViewPager control of a system and an adaptive large-screen display adjustment effect obtained by using a ViewPager control provided in an embodiment of this application. As shown in the figure, also in the large-screen display mode (to be specific, a size of a large screen displayed when the native control of the system is used is the same as a size of a large screen displayed when the control provided in this embodiment of this application is used), because of the ViewPager control provided in this embodiment of this application, if three or more views (views) are included in the control, all views (views) are scaled down in the large-screen display mode based on a size of the current large screen, a current view (view) is displayed completely in the middle, a previous page view and a next page view are displayed on two sides, and only 50% of each of the two views are displayed; if two views (views) are included in the control, the views (views) are scaled down in the large-screen display mode, and the views (views) are completely displayed; or if one view (view) is included in the control, the view (view) is scaled down and completely displayed in the large-screen display mode. Elements (sub-elements) displayed in the large-screen display mode by using the ViewPager control provided in this embodiment of this application are more than elements displayed by using the ViewPager control.

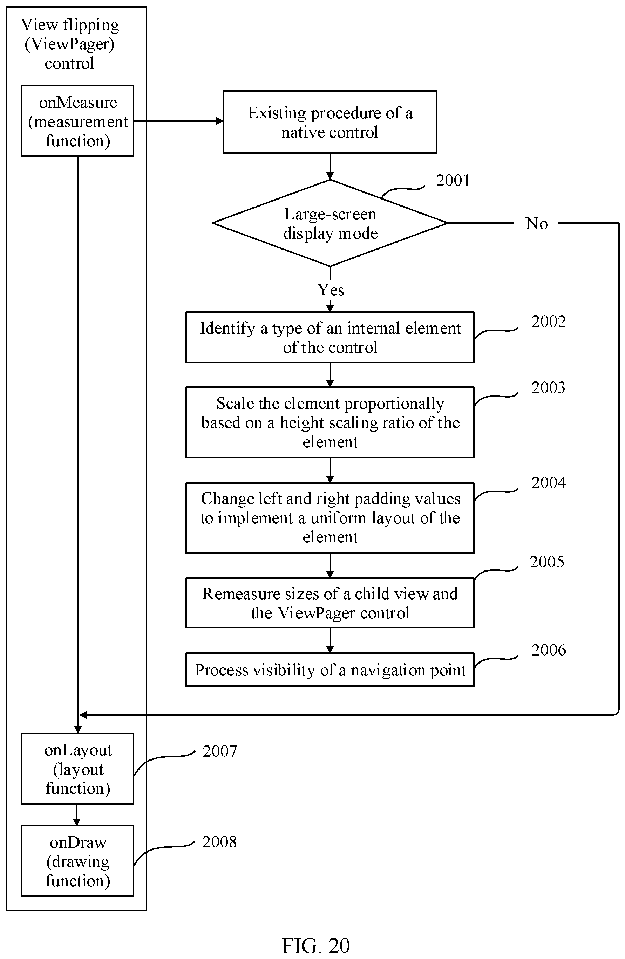

In some embodiments, an adjustment process of the ViewPager control may be associated with FIG. 20.

### (4) ListView control

The ListView control may determine a scaling size of an internal element (for example, a corresponding scaling strategy may be obtained based on a type of the element, and the scaling size of the element may be determined according to the scaling strategy) if it is determined, based on the first trigger event, that the first application is in the large-screen display mode, and determine a quantity of columns of internal elements and a spacing between the columns based on the scaling size (for example, a scaling width) of the internal element and a size of the control in the large-screen display mode (for example, a width of the control in the large-screen display mode), to extend the quantity of columns.

During development of a user interface, the control may be used to group a set of elements (sub-elements) into columns with or without column headers, and display accompanying icons and texts.

Optionally, a function of a native ListView control of a system may be enhanced, and a function of adjusting a display size, a layout, or the like of an internal element (a sub-element) of the control based on the perceived first trigger event to adapt to large-screen display may be added, so as to obtain the ListView control in this embodiment of this application.

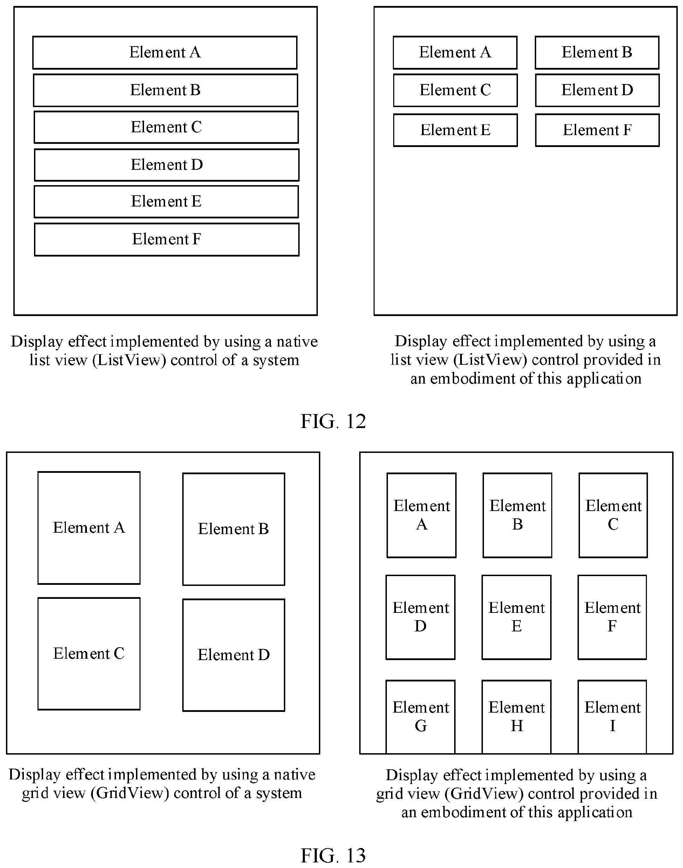

FIG. 12 is a diagram of an example of comparison between an adaptive large-screen display adjustment effect obtained by using a native ListView control of a system and an adaptive large-screen display adjustment effect obtained by using a ListView control provided in an embodiment of this application. As shown in the figure, also in the large-screen display mode (to be specific, a size of a large screen displayed when the native control of the system is used is the same as a size of a large screen displayed when the control provided in this embodiment of this application is used), because of the ListView control provided in this embodiment of this application, sizes of internal elements (or sub-elements) of the control may be scaled down in the large-screen display mode based on a size of the current large screen, and a quantity of columns of scaled-down elements (sub-elements) increases, so that more elements (sub-elements) can be displayed.

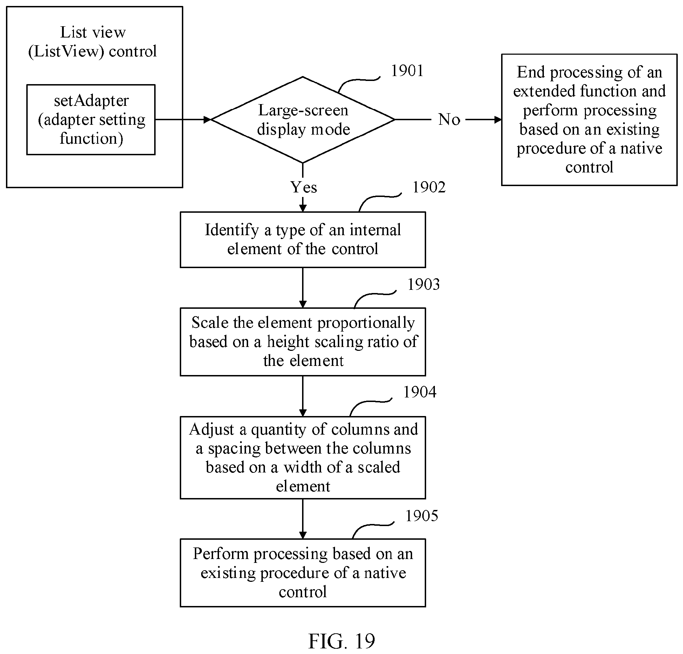

In some embodiments, an adjustment process of the ListView control may be associated with FIG. 19.

### (5) GridView control

The GridView control may determine a scaling size of an internal element (for example, a corresponding scaling strategy may be obtained based on a type of the element, and the scaling size of the element may be determined according to the scaling strategy) if it is determined, based on the first trigger event, that the first application is in the large-screen display mode, and determine a quantity of columns of internal elements and a spacing between the columns based on the scaling size (for example, a scaling width) of the internal element and a size of the control in the large-screen display mode (for example, a width of the control in the large-screen display mode), to extend the quantity of columns.

During development of a user interface, if elements (or sub-elements) are arranged in a grid, the GridView control can be used to implement layouts of these elements (or sub-elements). The GridView control can be used to present content (namely, the elements or the sub-elements) in a two-dimensional scrollable grid.

Optionally, a function of a native GridView control of a system may be enhanced, and a function of adjusting a display size, a layout, or the like of an internal element (a sub-element) of the control based on the perceived first trigger event to adapt to large-screen display may be added, so as to obtain the GridView control in this embodiment of this application.

FIG. 13 is a diagram of an example of comparison between an adaptive large-screen display adjustment effect obtained by using a native GridView control of a system and an adaptive large-screen display adjustment effect obtained by using a GridView control provided in an embodiment of this application. As shown in the figure, also in the large-screen display mode (to be specific, a size of a large screen displayed when the native control of the system is used is the same as a size of a large screen displayed when the control provided in this embodiment of this application is used), because of the GridView control provided in this embodiment of this application, sizes of internal elements (or sub-elements) of the control may be scaled down in the large-screen display mode based on a size of the current large screen, and a quantity of columns of scaled-down elements (sub-elements) increases, so that more elements (sub-elements) can be displayed.

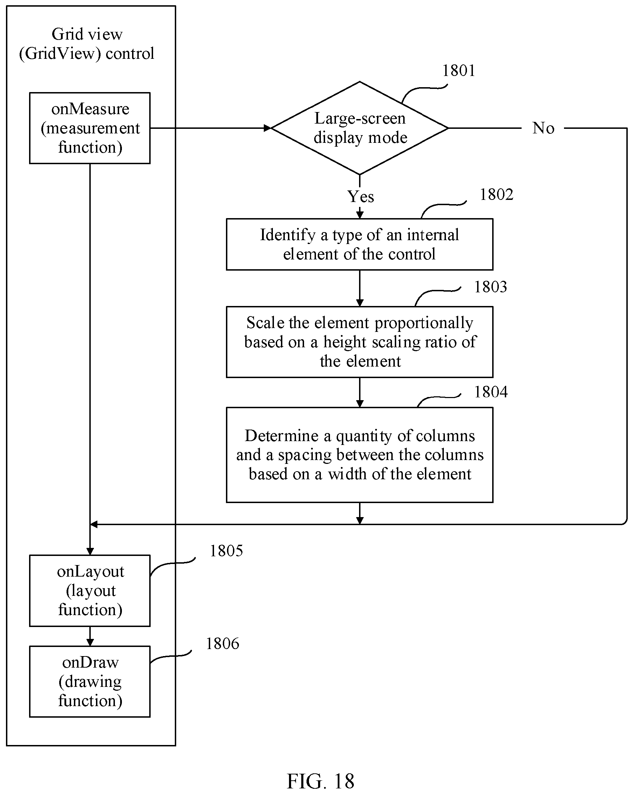

In some embodiments, an adjustment process of the GridView control may be associated with FIG. 18.

### (6) ImageView control

The ImageView control may determine a scaling size of an internal element (an image) (for example, a corresponding scaling strategy may be obtained based on a type of the element, and the scaling size of the element may be determined according to the scaling strategy) if it is determined, based on the first trigger event, that the first application is in the large-screen display mode, adjust a height of the control based on scaled internal element, and determine a layout of the internal element of the control based on the scaled internal element.

Optionally, the ImageView control may further generate a background element (a background image) based on the scaled element (image). The layout of the internal element of the control may be determined based on the scaled element and the background element (background image).

The control can automatically adjust an image size. Optionally, the control can also achieve a Gaussian blur effect on two sides. The control can be used to display an image during development of a user interface.

Optionally, a function of a native ImageView control of a system may be enhanced, and a function of adjusting a display size, a layout, or the like of an internal element (a sub-element) of the control based on the perceived first trigger event to adapt to large-screen display may be added, so as to obtain the ImageView control in this embodiment of this application.

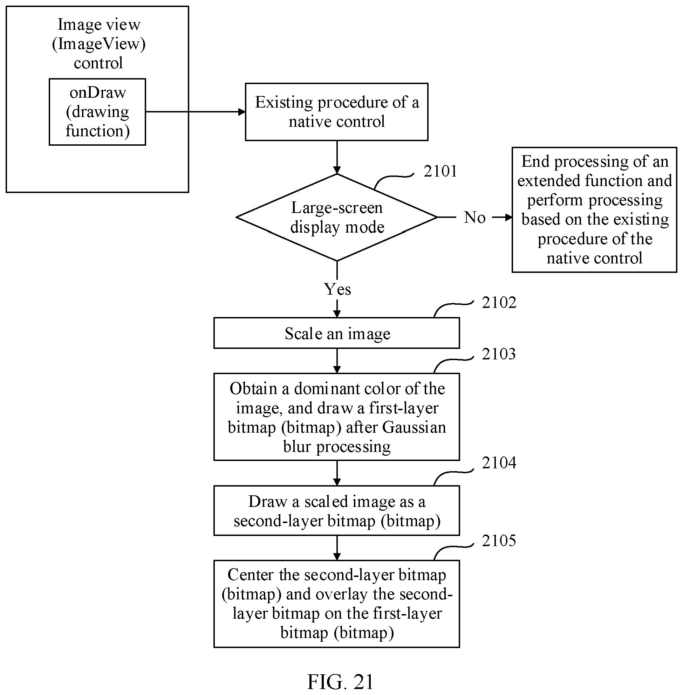

In some embodiments, an adjustment process of the ImageView control may be associated with FIG. 21.

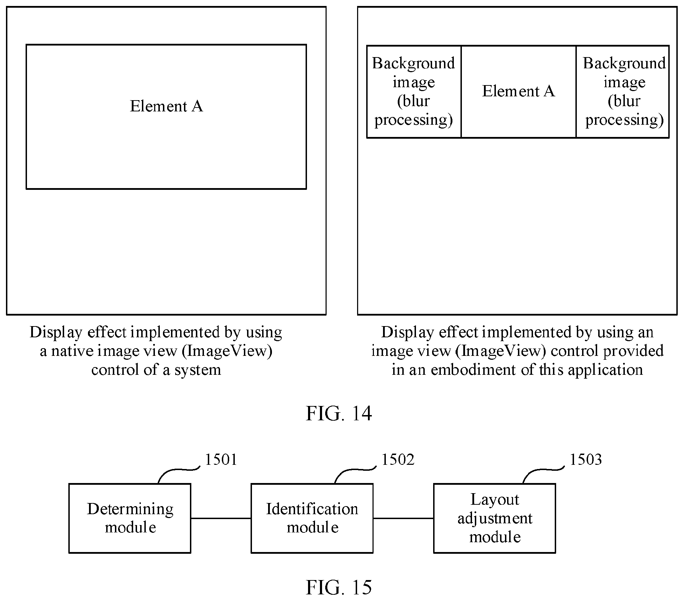

FIG. 14 is a diagram of an example of comparison between an adaptive large-screen display adjustment effect obtained by using a native ImageView control of a system and an adaptive large-screen display adjustment effect obtained by using an ImageView control provided in an embodiment of this application. As shown in the figure, also in the large-screen display mode (to be specific, a size of a large screen displayed when the native control of the system is used is the same as a size of a large screen displayed when the control provided in this embodiment of this application is used), because of the ImageView control provided in this embodiment of this application, a size of an internal element (or a sub-element) (namely, an image) of the control may be scaled down in the large-screen display mode based on a size of the current large screen, and a background image obtained by performing Gaussian blur processing is displayed in regions on two sides of the image, to improve viewing experience of the user.

In this embodiment of this application, for a user interface, user interface programming design may be performed based on one or more of the foregoing controls, a type of content (for example, an image or a text) included on the user interface, and a layout requirement of the content. In the foregoing controls, some controls (for example, the ViewPager control) are container controls. For container controls, other controls may be further added to the container controls.

It should be noted that a naming scheme of the foregoing controls is not limited in embodiments of this application.

It should be further noted that the foregoing controls are merely examples. Embodiments of this application may further provide other type of controls, to provide a layout function for the user interface and implement an adaptive user interface adjustment function in the large-screen display mode.

According to the foregoing descriptions, in general, the controls provided in this embodiment of this application can implement the following functions: a function of obtaining a screen size of a terminal and a window size of an application, a function of identifying a type of an internal element of the control, and a function of determining a scaling size and a layout of the internal element of the control based on the screen size of the terminal, the window size of the application, and the type of the internal element of the control, so that a graphics manager in the terminal can draw, based on the scaling size and the layout of the internal element of the control, a user interface adapted to large-screen display.

Based on the foregoing functions, FIG. 15 is a diagram of an example of a functional architecture of a control according to an embodiment of this application. As shown in the figure, the control may include the following functional modules: a determining module 1501, an identification module 1502, and a layout adjustment module 1503. Functions of the foregoing modules are as follows:
The determining module 1501 is configured to determine, in response to a first trigger event, that a first application is in a large-screen display mode. Optionally, the determining module 1501 may obtain a screen size of a current terminal and a window size of the first application, and determine, based on the screen size of the terminal and the window size of the first application, whether the first application is in the large-screen display mode. Optionally, the determining module 1501 may obtain the screen size of the current terminal and the window size of the first application from a window management module, to determine whether the first application is in the large-screen display mode.

The identification module 1502 is configured to identify a type of an internal element of the control.

The layout adjustment module 1503 is configured to determine a scaling size and a layout of the internal element of the control based on the screen size of the terminal, the window size of the first application, and the type of the internal element of the control.

For example, the internal element (or a sub-element) of the control may include an image, a text, or the like. In this embodiment of this application, images are classified into several types based on aspect ratios of the images, and a corresponding scaling ratio or scaling strategy is set for each type, so that the layout adjustment module 1503 may perform scaling processing based on an identified image type and the corresponding scaling ratio or scaling strategy.

Examples of several image types and corresponding scaling ratios or scaling strategies are provided below.
- "Immersive large image": image width = image width. A scaling strategy is that a height of an image is adjusted to: height of a screen display region × a1, or height of a window of an application in the large-screen display mode × a1, and a width of the image is adjusted proportionally, where a1 is greater than 0 and less than 1, for example, a1 = 0.25.
- "Wide image": image height ≤ image width × α, and α > 1. For example, α = 1.2. A scaling strategy is that a height of an image is adjusted to: height of a screen display region × a2, or height of a window of an application in the large-screen display mode × a2, and a width of the image is adjusted proportionally, where a2 is greater than 0 and less than 1, for example, a2 = 0.2.
- "Long image": image height > image width × β, and β > 1. For example, β = 1.2. A scaling strategy is that a height of an image is adjusted to: height of a screen display region × a3, or height of a window of an application in the large-screen display mode × a3, and a width of the image is adjusted proportionally, where a3 is greater than 0 and less than 1, for example, a3 = 0.25.
- "Small icon": A width and a height of an image are less than 50 dp. A scaling strategy is that the height of the image is adjusted to: height of a screen display region × a4, or height of a window of an application in the large-screen display mode × a4, and the width of the image is adjusted proportionally, where a4 is greater than 0 and less than 1, for example, a4 = 0.1.

For example, if the internal element (or the sub-element) of the control is a text, scaling may be performed according to the following scaling strategy: A height of the text is adjusted to: height of a screen display region × a5, where a5 is greater than 0 and less than 1, for example, a5 = 0.1.

It should be noted that the foregoing is merely an example of the scaling ratio, and the scaling ratio is not limited in embodiments of this application.

It should be further noted that, if controls are nested in use, for the outermost control, scaling processing may be performed on the element (or the sub-element) based on a size of a screen display region in the large-screen display mode and a scaling ratio (or a scaling strategy) corresponding to a type of the element (sub-element). For an inner layer control, scaling processing may be performed on an element (or a sub-element) included in the inner layer control based on a size of the inner layer control and a scaling ratio (or a scaling strategy) corresponding to a type of the element (sub-element). The inner layer control is used as an internal element of an outer layer control, and a size of the inner layer control may be controlled by the outer layer control. For example, in the large-screen display mode, the outer layer control adjusts a size of the control nested in an inner layer based on a screen size, a type of an element accommodated in the control nested in the inner layer, a category of the element, and a corresponding scaling strategy.

For specific implementations of the foregoing modules, refer to descriptions of the foregoing embodiments.

The following uses the foregoing six controls provided in embodiments of this application as an example to describe a logic processing procedure of each control.

It should be noted that "element" in the following procedure may also be replaced with "sub-element".

### (1) LinearLayout control

For example, FIG. 16 shows a logic processing procedure of the LinearLayout control. The logic processing procedure may include the following three phases: a measurement phase (for example, an onMeasure phase in the figure), a layout phase (for example, an onLayout phase in the figure), and a drawing phase (for example, an onDraw phase in the figure). Each phase may be implemented by using a corresponding function. For example, a procedure of the measurement phase is implemented by using an onMeasure function, a procedure of the layout phase is implemented by using an onLayout function, and a procedure of the drawing phase is implemented by using an onDraw function. For example, in a running process of an application, a thread corresponding to the LinearLayout control may implement, by invoking these functions, a function of adjusting a size and a layout of an internal element of the control to adapt to large-screen display.

Optionally, the LinearLayout control in this embodiment of this application may be implemented by adding new service logic provided in this embodiment of this application to an onMeasure phase and an onLayout phase of a native LinearLayout control. The following logic processing capabilities are added to the LinearLayout control provided in this embodiment of this application rather than the native LinearLayout control.

In the onMeasure phase, the following logic processing capabilities are added: a logic processing capability of obtaining the screen size of the current terminal and a window size of a current application, and determining, based on the screen size and the window size, whether the current terminal is in the large-screen display mode; a logic processing capability of identifying a type of the internal element of the control; and a logic processing capability of determining a scaling size of the internal element.

In the onLayout phase, a logic processing capability of re-laying out the internal element of the control based on a size of scaled internal element of the control (for example, the element is linearly laid out) is added.

As shown in FIG. 16, the logic processing procedure of the LineaLayout control may include the following steps.

Measurement (onMeasure) phase: In 1601, it is determined, based on a received first trigger event, whether a terminal is in a large-screen display mode. If it is determined that the terminal is in the large-screen display mode, the procedure proceeds to 1602. In step 1602, the type of the internal element is identified. In the following step 1603, the scaling size of the internal element is determined based on the type of the internal element, and scaling processing is performed based on the determined scaling size. If it is determined in step 1601 that the terminal is not in the large-screen display mode, a processing procedure of extending a native control in this embodiment of this application ends. Further, processing may be performed based on an existing procedure of the native control. Optionally, before onMeasure is performed, if it is already learned that the application is in the large-screen display mode, step 1601 does not need to be performed.

Layout (onLayout) phase: In step 1604, it is determined whether the terminal is currently in the large-screen display mode; and if the terminal is the large-screen display mode, the procedure proceeds to step 1605. In 1605, a quantity of elements that can be arranged in a row and an average spacing between adjacent elements are determined based on a size (width) of a scaled element and a width (for example, including a screen width in the large-screen display mode; or for an inner layer control, a width obtained through adjustment by a corresponding outer layer control of the inner layer control) of a display region corresponding to the control in the large-screen display mode, and internal elements of the control are linearly laid out. For example, scaled elements (sub-elements) are arranged in an order from left to right. If the elements cannot be arranged in a row, the elements can be arranged in a next row until all elements (sub-elements) are arranged. A quantity of elements (sub-elements) that can be arranged in a row depends on a current screen width. If it is determined in step 1604 that the terminal is not in the large-screen display mode, a processing procedure of extending a native control in this embodiment of this application ends, and processing may be performed based on an existing procedure of the native control.

Drawing (onLayout) phase: In 1606, the onLayout function is invoked to perform interface drawing based on a size and a layout of a re-adjusted element, so that the scaled internal element of the control is linearly laid out.

It should be noted that step 1601 or step 1604 in the foregoing procedure is an optional step. For example, if step 1601 is performed in the onMeasure phase, step 1604 may not be performed in the onLayout phase; instead, step 1605 is performed after step 1603.

For specific implementations related to the measurement (onMeasure) phase, the layout (onLayout) phase, and the drawing (onMeasure) phase of the LineaLayout control, refer to the foregoing embodiment. Details are not repeated herein.

It should be noted that, in the procedure shown in FIG. 16, logic processing procedures of the measurement (onMeasure) phase and the layout (onLayout) phase are independent of each other. Therefore, in the layout (onLayout) phase, whether the terminal is currently in the large-screen display mode needs to be determined again, to ensure accuracy of logic processing. The foregoing is merely an example. In another logic processing procedure, the step of determining whether the terminal is currently in the large-screen display mode may alternatively be performed only once. This is not limited in embodiments of this application.

### (2) RecyclerView control

For example, FIG. 17 shows a logic processing procedure of the RecyclerView control. The logic processing procedure may include the following three phases: a measurement phase (for example, an onMeasure phase in the figure), a layout phase (for example, an onLayout phase in the figure), and a drawing phase (for example, an onDraw phase in the figure). Each phase may be implemented by using a corresponding function. For example, a procedure of the measurement phase is implemented by using an onMeasure function, a procedure of the layout phase is implemented by using an onLayout function, and a procedure of the drawing phase is implemented by using an onDraw function. For example, in a running process of an application, a thread corresponding to the RecyclerView control may implement, by invoking these functions, a function of adjusting a size and a layout of an internal element of the control to adapt to large-screen display.

Optionally, the RecyclerView control in this embodiment of this application may be implemented by adding new service logic provided in this embodiment of this application to an onMeasure phase of a native RecyclerView control. The following logic processing capabilities are added to the RecyclerView control provided in this embodiment of this application rather than the native RecyclerView control.

In the onMeasure phase, the following logic processing capabilities are added: a logic processing capability of obtaining the screen size of the current terminal and a window size of a current application, and determining, based on the screen size and the window size, whether the current terminal is in the large-screen display mode; a logic processing capability of identifying a type of the internal element of the control; and a logic processing capability of determining a scaling size of the internal element and determining a layout of the element (for example, including determining a quantity of columns of elements and a spacing between the columns) based on the scaling size. Optionally, before onMeasure is performed, if it is already learned that the application is in the large-screen display mode, step 1701 does not need to be performed.

As shown in FIG. 17, the logic processing procedure of the RecyclerView control may include the following steps.

Measurement (onMeasure) phase: In 1701, it is determined, based on a received first trigger event, whether a terminal is in a large-screen display mode. If it is determined that the terminal is in the large-screen display mode, the procedure proceeds to 1702. In 1702, the type of the internal element is identified. In the following step 1703, the scaling size of the internal element is determined based on the type of the internal element. In the following step 1704, a quantity of columns of elements and a spacing between the columns are determined based on a size (width) of a scaled element and a width (for example, including a screen width in the large-screen display mode; or for an inner layer control, a width obtained through adjustment by a corresponding outer layer control of the inner layer control) of a display region corresponding to the control in the large-screen display mode. If it is determined in step 1701 that the terminal is not in the large-screen display mode, a processing procedure of extending a native control in this embodiment of this application ends. Further, processing may be performed based on an existing procedure of the native control.

Layout (onLayout) phase: In 1705, a layout of the internal element of the control is obtained based on the quantity of columns of elements and the spacing between the columns.

Drawing (onLayout) phase: In 1706, the onLayout function is invoked to perform interface drawing based on a size and a layout of a re-adjusted element.

For specific implementations related to the measurement (onMeasure) phase, the layout (onLayout) phase, and the drawing (onMeasure) phase of the RecyclerView control, refer to the foregoing embodiment. Details are not repeated herein.

It should be noted that the foregoing is merely an example. In another logic processing procedure, the step of determining the spacing between the columns and the step of determining the layout of the element may alternatively be performed in the layout (onLayout) phase. This is not limited in embodiments of this application.

### (3) GridView control

For example, FIG. 18 shows a logic processing procedure of the GridView control. The logic processing procedure may include the following three phases: a measurement phase (for example, an onMeasure phase in the figure), a layout phase (for example, an onLayout phase in the figure), and a drawing phase (for example, an onDraw phase in the figure). Each phase may be implemented by using a corresponding function. For example, a procedure of the measurement phase is implemented by using an onMeasure function, a procedure of the layout phase is implemented by using an onLayout function, and a procedure of the drawing phase is implemented by using an onDraw function. For example, in a running process of an application, a thread corresponding to the GridView control may implement, by invoking these functions, a function of adjusting a size and a layout of an internal element of the control to adapt to large-screen display.

Optionally, the GridView control in this embodiment of this application may be implemented by adding new service logic provided in this embodiment of this application to an onMeasure phase of a native GridView control. The following logic processing capabilities are added to the GridView control provided in this embodiment of this application rather than the native GridView control.

In the onMeasure phase, the following logic processing capabilities are added: a logic processing capability of obtaining the screen size of the current terminal and a window size of a current application, and determining, based on the screen size and the window size, whether the current terminal is in the large-screen display mode; a logic processing capability of identifying a type of the internal element of the control; and a logic processing capability of determining a scaling size of the internal element and determining a layout of the element (for example, determining a quantity of columns of elements and a spacing between the columns) based on the scaling size. Optionally, before onMeasure is performed, if it is already learned that the application is in the large-screen display mode, step 1801 does not need to be performed.

As shown in FIG. 18, the logic processing procedure of the GridView control may include the following steps.

Measurement (onMeasure) phase: In 1801, it is determined, based on a received first trigger event, whether a terminal is in a large-screen display mode. If it is determined that the terminal is in the large-screen display mode, the procedure proceeds to 1802. In 1802, the type of the internal element is identified. In the following step 1803, the scaling size of the internal element is determined based on the type of the internal element, for example, the element is proportionally scaled based on a height scaling ratio of the element. In the following step 1804, a quantity of columns of elements and a spacing between the columns are determined based on a size (width) of a scaled element and a width (for example, including a screen width in the large-screen display mode; or for an inner layer control, a width obtained through adjustment by a corresponding outer layer control of the inner layer control) of a display region corresponding to the control in the large-screen display mode. If it is determined in step 1801 that the terminal is not in the large-screen display mode, a processing procedure of extending a native control in this embodiment of this application ends. Further, processing may be performed based on an existing procedure of the native control.

Layout (onLayout) phase: In 1805, a layout of the internal element of the control is obtained based on the quantity of columns of elements and the spacing between the columns.

Drawing (onLayout) phase: In 1806, the onLayout function is invoked to perform interface drawing based on a size and a layout of a re-adjusted element.

For specific implementations related to the measurement (onMeasure) phase, the layout (onLayout) phase, and the drawing (onMeasure) phase of the GridView control, refer to the foregoing embodiment. Details are not repeated herein.

It should be noted that the foregoing is merely an example. In another logic processing procedure, the step of determining the spacing between the columns and the step of determining the layout of the element may alternatively be performed in the layout (onLayout) phase. This is not limited in embodiments of this application.

### (4) ListView control

For example, FIG. 19 shows a logic processing procedure of the ListView control. The logic processing procedure may include an adapter setting phase (for example, setAdapter in the figure). This phase can be implemented by using a setAdapter function. For example, in a running process of an application, a thread corresponding to the ListView control may implement, by invoking the setAdapter function, a function of adjusting a size and a layout of an internal element of the control to adapt to large-screen display.

Optionally, the ListView control in this embodiment of this application may be implemented by adding new service logic provided in this embodiment of this application to a setAdapter phase of a native ListView control. The following logic processing capabilities are added to the ListView control provided in this embodiment of this application rather than the native ListView control.

In the setAdapter phase, the following logic processing capabilities are added: a logic processing capability of obtaining the screen size of the current terminal and a window size of a current application, and determining, based on the screen size and the window size, whether the current terminal is in the large-screen display mode; a logic processing capability of identifying a type of the internal element of the control; and a logic processing capability of determining a scaling size of the internal element and determining a layout of the element (for example, determining a quantity of columns of elements and a spacing between the columns) based on the scaling size. Optionally, before setAdapter is performed, if it is already learned that the application is in the large-screen display mode, step 1901 does not need to be performed.

As shown in FIG. 19, the logic processing procedure of the ListView control may include the following steps.

Adapter setting (setAdapter) phase: In 1901, it is determined, based on a received first trigger event, whether a terminal is in a large-screen display mode. If it is determined that the terminal is in the large-screen display mode, the procedure proceeds to 1902. In 1902, the type of the internal element is identified. In the following step 1903, a scaling size of the internal element is determined based on the type of the internal element, for example, the element is proportionally scaled based on a height scaling ratio of the element. In the following step 1904, a quantity of columns of elements and a spacing between the columns are determined based on a size (width) of a scaled element and a width (for example, including a screen width in the large-screen display mode; or for an inner layer control, a width obtained through adjustment by a corresponding outer layer control of the inner layer control) of a display region corresponding to the control in the large-screen display mode, to obtain a layout of an adjusted element. In the following step 1905, processing is performed based on a conventional procedure, for example, interface drawing is performed based on a size and a layout of the readjusted element. If it is determined in step 1901 that the terminal is not in the large-screen display mode, a processing procedure of extending a native control in this embodiment of this application ends. Further, processing may be performed based on an existing procedure of the native control.

For a specific implementation related to the adapter setting phase (setAdapter) of the ListView control, refer to the foregoing embodiment. Details are not repeated herein.

### (5) ViewPager control

For example, FIG. 20 shows a logic processing procedure of the ViewPager control. The logic processing procedure may include the following three phases: a measurement phase (for example, an onMeasure phase in the figure), a layout phase (for example, an onLayout phase in the figure), and a drawing phase (for example, an onDraw phase in the figure). Each phase may be implemented by using a corresponding function. For example, a procedure of the measurement phase is implemented by using an onMeasure function, a procedure of the layout phase is implemented by using an onLayout function, and a procedure of the drawing phase is implemented by using an onDraw function. For example, in a running process of an application, a thread corresponding to the ViewPager control may implement, by invoking these functions, a function of adjusting a size and a layout of an internal element of the control to adapt to large-screen display.

Optionally, the ViewPager control in this embodiment of this application may be implemented by adding new service logic provided in this embodiment of this application to an onMeasure phase of a native ViewPager control. The following logic processing capabilities are added to the ViewPager control provided in this embodiment of this application rather than the native ViewPager control.

In the onMeasure phase, the following logic processing capabilities are added: a logic processing capability of obtaining the screen size of the current terminal and a window size of a current application, and determining, based on the screen size and the window size, whether the current terminal is in the large-screen display mode; and a logic processing capability of determining a scaling size of the internal element and determining a layout of the element based on the scaling size.

As shown in FIG. 20, the logic processing procedure of the ViewPager control may include the following steps.

Measurement (onMeasure) phase: In 2001, it is determined, based on a received first trigger event, whether a terminal is in a large-screen display mode. If it is determined that the terminal is in the large-screen display mode, the procedure proceeds to 2002. In 2002, a type of the internal element is identified. In the following step 2003, the scaling size of the internal element is determined based on a quantity of internal elements and a width (for example, including a screen width in the large-screen display mode; or for an inner layer control, a width obtained through adjustment by a corresponding outer layer control of the inner layer control) of a display region corresponding to the control in the large-screen display mode (for example, the element is proportionally scaled based on a height scaling ratio of the element). In the following step 2004, the layout of the element is determined based on the quantity of internal elements. For example, padding (padding) values on two sides of the element are determined, that is, sizes of a previous element and a next element on the two sides of the element are determined. In the following step 2005, a size of the ViewPager control is determined again based on a size of adjusted elements and a spacing between the elements. In the following step 2006, it is determined, based on the quantity of internal elements, whether a navigation identifier is set. If the navigation identifier needs to be set, the navigation identifier is set based on a measurement result in step 2005.

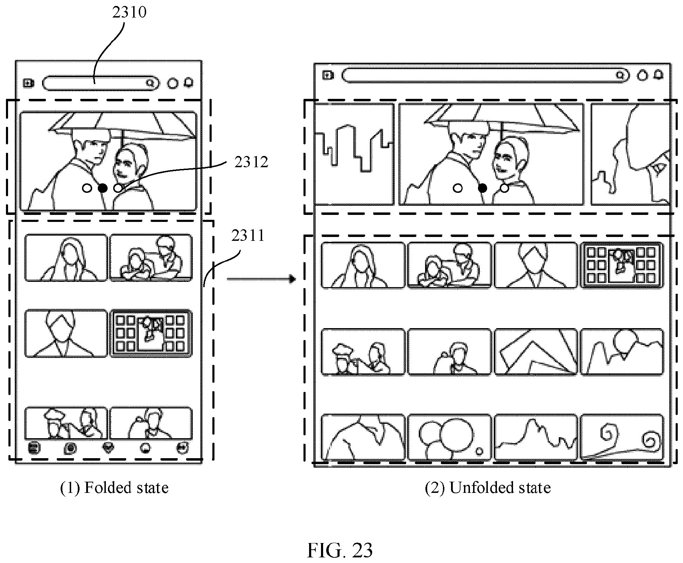

For example, when there are a large quantity (for example, three or more) of internal elements of the ViewPager control, a navigation identifier may be set. The navigation identifier may be used to indicate that there are a large quantity of internal elements of the ViewPager control, so that the user can select among a plurality of elements based on a corresponding screen touch operation (for example, a sliding operation). In addition, the navigation identifier may be used to indicate a location of a currently displayed element in all elements of the ViewPager control, for example, the currently displayed element is a 1^{st} element, a last element, or a middle element. The navigation identifier may be presented in a plurality of forms. This is not limited in embodiments of this application. For example, the ViewPager control has three or more internal elements. A presentation form of the navigation identifier is that three dots are arranged in a row, shown as navigation points in FIG. 22 or FIG. 23. Only one of the three dots can be a solid dot and the other two can be hollow dots. If a dot in the middle is a solid dot, it indicates that the currently displayed element is an element in the middle of the ViewPager control. If a dot on the left is a solid dot, it indicates that the currently displayed element is a 1^{st} element in the ViewPager control. If a dot on the right is a solid dot, the currently displayed element is a last element in the ViewPager control.

If it is determined in step 2001 that the terminal is not in the large-screen display mode, a processing procedure of extending a native control in this embodiment of this application ends. Further, processing may be performed based on an existing procedure of the native control. Optionally, before onMeasure is performed, if it is already learned that the application is in the large-screen display mode, step 2001 does not need to be performed.

Layout (onLayout) phase: In 2007, the layout of the internal element of the control is determined.

Drawing (onLayout) phase: In 2008, the onLayout function is invoked to perform interface drawing based on a size and a layout of a re-adjusted element.

For specific implementations related to the measurement (onMeasure) phase, the layout (onLayout) phase, and the drawing (onMeasure) phase of the ViewPager control, refer to the foregoing embodiment. Details are not repeated herein.

It should be noted that the foregoing is merely an example. In another logic processing procedure, the step of determining the spacing between the columns and the step of determining the layout of the element may alternatively be performed in the layout (onLayout) phase. This is not limited in embodiments of this application.

### (6) ImageView control

For example, FIG. 21 shows a logic processing procedure of the ImageView control. The logic processing procedure may include a drawing phase (for example, an onDraw phase in the figure). A procedure of the drawing phase is implemented by using an onDraw function. For example, in a running process of an application, a thread corresponding to the ImageView control may implement, by invoking the function, a function of adjusting a size and a layout of an internal element of the control to adapt to large-screen display.

Optionally, the ImageView control in this embodiment of this application may be implemented by adding new service logic provided in this embodiment of this application to an onMeasure phase of a native ImageView control. The following logic processing capabilities are added to the ImageView control provided in this embodiment of this application rather than the native ImageView control.

In the onDraw phase, the following logic processing capabilities are added: a logic processing capability of obtaining the screen size of the current terminal and a window size of a current application, and determining, based on the screen size and the window size, whether the current terminal is in the large-screen display mode; a logic processing capability of determining a scaling size of the internal element and setting a background; and a logic processing capability of determining the layout of the element based on the scaling size and the background. Optionally, before onDraw is performed, if it is already learned that the application is in the large-screen display mode, step 2101 does not need to be performed.

As shown in FIG. 21, the logic processing procedure of the ImageView control may include the following steps.

Drawing (onDraw) phase: In 2101, it is determined, based on a received first trigger event, whether a terminal is in a large-screen display mode. If it is determined that the terminal is in the large-screen display mode, the procedure proceeds to 2102. In 2102, a scaling size of an image inside the control is determined based on a height (for example, including a screen width in the large-screen display mode; or for an inner layer control, a width obtained through adjustment by a corresponding outer layer control of the inner layer control) of a display region corresponding to the control in the large-screen display mode. In the following step 2103, a dominant color of the image is obtained, Gaussian blur processing is performed on the image based on the dominant color, and a first-layer bitmap (bitmap) is drawn based on an image obtained by performing Gaussian blur processing. A height of the first-layer bitmap is a height determined by scaling, and a width is a width of a display region of the control on a large screen. In the following step 2104, a scaled image is drawn into a second-layer bitmap (bitmap). In the following step 2105, the second layer bitmap is centered and overlaid on the first-layer bitmap. If it is determined in step 2101 that the terminal is not in the large-screen display mode, a processing procedure of extending a native control in this embodiment of this application ends. Further, processing may be performed based on an existing procedure of the native control.

For a specific implementation related to the drawing (onDraw) phase of the ImageView control, refer to the foregoing embodiment. Details are not repeated herein.

It should be noted that step 2103 is an optional step in the foregoing procedure. If step 2103 does not exist, in step 2105, the bitmap drawn in step 2104 is centered.

According to one or more of the foregoing embodiments of this application, a foldable mobile phone is used as an example. FIG. 22 and FIG. 23 are examples of comparison between effects obtained before and after embodiments of this application are used.

Refer to FIG. 22. (1) on the left side of FIG. 22 shows a user interface of an application displayed on a screen of the foldable mobile phone when the mobile phone is in a folded state. The user interface includes a page flipping region 2210 and a video resource display region 2211. The page flipping region 2210 includes a navigation identifier 2212. The page flipping region 2210 is implemented by a native ViewPager control of a system. The video resource display region 2211 includes images of a plurality of video resources, and the video resource display region 2211 is implemented by a native LinearLayout control of the system.

After the foldable mobile phone switches from the folded state to an unfolded state, the user interface may be shown in (2) on the right side of FIG. 22. It can be learned that, when the foldable mobile phone switches from the folded state to the unfolded state without using this embodiment of this application (that is, using a native control of the system), content displayed on a user interface on a large screen does not increase, and the user interface does not adapt to large-screen display.

Refer to FIG. 23. (1) on the left side of FIG. 23 shows a user interface of an application displayed on a screen of the foldable mobile phone when the mobile phone is in a folded state. The user interface includes a page flipping region 2310 and a video resource display region 2311. The page flipping region 2310 includes a navigation identifier 2312. The page flipping region 2310 is implemented by the ViewPager control provided in this embodiment of this application. The video resource display region 2311 includes images of a plurality of video resources, and the video resource display region 2311 is implemented by the LinearLayout control provided in this embodiment of this application.

After the foldable mobile phone switches from the folded state to an unfolded state, the user interface may be shown in (2) on the right side of FIG. 23. It can be learned that, compared with (2) in FIG. 22, when this embodiment of this application is used (that is, when the control provided in this embodiment of this application is used), the foldable mobile phone switches from the folded state to the unfolded state. On a user interface on a large screen, a current image, a previous image, and a next image are displayed in the page flipping region. In the video resource display region, a video resource image is scaled down, and the video resource image is re-laid out linearly, so that more time-frequency resource images can be arranged in a row. It can be learned that, after this embodiment of this application is used, after the mobile phone switches from the folded state to the unfolded state, the user interface is re-laid out, so that the user interface adapts to large-screen display in the current unfolded state.

Based on a same technical concept, an embodiment of this application further provides a terminal. The terminal can implement functions and methods implemented by the terminal in embodiments of this application.

FIG. 26 is a diagram of a structure of a terminal according to an embodiment of this application. The terminal may include a detection module 2601, a processing module 2602, and a display module 2603.

The detection module 2601 is configured to: detect a first trigger event, and determine, based on the first trigger event, that a first application is in a large-screen display mode. The processing module 2602 is configured to: obtain an internal element of a control on a first user interface, determine a scaling size of the element, determine a layout of the internal element of the control based on the scaling size of the element and a size of the control in the large-screen display mode, and draw a second user interface based on the scaling size of the element and the layout of the internal element of the control. The display module 2603 is configured to display the second user interface.

For a specific implementation in which the detection module 2601 detects the first trigger event and determines, based on the first trigger event, that the first application is in the large-screen display mode, refer to related content in the procedures described in FIG. 8a and FIG. 8b.

For a specific implementation in which the processing module 2602 performs scaling processing and layout processing on the element, refer to related content in the procedures described in FIG. 8a and FIG. 8b.

For a specific implementation in which the display module 2603 displays the second user interface, refer to related content in the procedures described in FIG. 8a and FIG. 8b.

An aspect not claimed of this application further provides a computer-readable storage medium. The computer-readable storage medium is configured to store a computer program. When the computer program is executed by a computer, the computer can implement the method provided in the foregoing method embodiments.

An aspect not claimed of this application further provides a computer program product. The computer program product is configured to store a computer program. When the computer program is executed by a computer, the computer can implement the method provided in the foregoing method embodiments.

An aspect not claimed of this application further provides a chip, including a processor. The processor is coupled to a memory, and is configured to invoke a program in the memory, so that the chip implements the method provided in the foregoing method embodiments.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product implemented on one or more computer-usable storage media (including but not limited to a disk memory, a CD-ROM, and an optical memory) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of the enclosed claims of this application.

## Claims

1. A display method for implementation by a terminal (100) or by an apparatus or a module that is configured to implement the display method, wherein a display status of the terminal (100) comprises a large-screen state and a small-screen state, the terminal is configured to run at least a first application, the first application is configured to be displayed, on a display screen (194) of the terminal (100), in full screen, a display mode of the first application displayed in full screen in the large-screen state of the terminal (100) is a large-screen display mode, and a display mode of the first application displayed in full screen in the small-screen state of the terminal (100) is a small-screen display mode,
wherein a control is a graphical user interface element configured to lay out an object or data on the graphical user interface in the form of at least one internal element of the control, and wherein a control can implement at least the following functions: a function of obtaining a screen size of a terminal and a window size of an application, a function of identifying a type of an internal element of the control, and a function of determining a scaling size and a layout of the internal element based on the screen size of the terminal, the window size of the application, and the type of the internal element,
wherein the display method comprises:
detecting (S801) a first trigger event used to trigger displaying a first application in the large-screen display mode, and determining (1601, 1701, 1801, 1901, 2001, 2101), based on the first trigger event, that the first application is in the large-screen display mode;
obtaining (S802) an internal element of a control on a first user interface of the terminal (100), and identifying (1602, 1702, 1802, 1902, 2002) a type of the internal element;
determining (S803; 1603, 1703, 1803, 1903, 2003, 2102) a scaling size of the internal element based on the determined type of the internal element, and determining (1605, 1705, 1805, 1905, 2004, 2005) a layout of the internal element based on the determined (1603, 1703, 1803, 1903, 2003) scaling size of the internal element and a size of the control in the large-screen display mode of the first application; and
drawing (S804; 1606, 1706, 1806, 2008, 2104) a second user interface of the terminal (100) based on the determined (1603, 1703, 1803, 1903, 2003, 2102) scaling size of the internal element and the determined (1605, 1705, 1805, 1905, 2004, 2005) layout of the internal element of the control, and displaying (S805) the second user interface of the terminal (100).

2. The method according to claim 1, wherein the size of the control in the large-screen display mode comprises a width of the control in the large-screen display mode; and
the width of the control in the large-screen display mode is associated with a screen width in the large-screen display mode; or
the width of the control in the large-screen display mode is associated with a window width of the first application in the large-screen display mode; or
the control is nested in a first control (30; 32) as a child control (31; 33, 34), and the width of the control in the large-screen display mode is associated with a scaling width that is of the child control (31; 33, 34) and that is determined by the first control (30; 32) in the large-screen display mode.

3. The method according to claim 1 or 2, wherein if the first user interface comprises a first pop-up window (2401), and the method further comprises:
obtaining (S810) an internal element of a control in the first pop-up window, determining a scaling size of the internal element, determining a scaling size of the control in the first pop-up window (2401) based on the scaling size of the internal element, and determining a scaling size of the first pop-up window (2401) based on the scaling size of the control in the first pop-up window (2401);
determining (S811), based on the scaling size of the first pop-up window (2401), and a location of a scaled first pop-up window; and
drawing (S812) a second pop-up window (2402) based on a size of the first pop-up window (2401) and the location of the scaled first pop-up window, wherein the second pop-up window (2402) is comprised on the second user interface, and the second pop-up window (2402) comprises an element obtained through scaling based on the scaling size of the internal element of the control in the first pop-up window (2401).

4. The method according to any one of claims 1 to 3, wherein the determining (S803) a scaling size of the internal element comprises:
obtaining (1602, 1702, 1802, 1902, 2002) a type of the internal element;
obtaining, based on the type of the internal element, a scaling strategy corresponding to the type of the internal element; and
determining the scaling size of the internal element based on the size of the control in the large-screen display mode and the scaling strategy.

5. The method according to claim 4, wherein the obtained type of the internal element is one of a text type and an image type; and
if the type of the internal element is the image type, the image type is one of a plurality of subtypes, and the plurality of subtypes are separately associated with an aspect ratio of an image.

6. The method according to any one of claims 1 to 5, wherein a scaling ratio of a width of the internal element before scaling to that of the internal element after scaling is equal to a scaling ratio of a height of the internal element before scaling to that of the internal element after scaling.

7. The method according to any one of claims 1 to 6, wherein if the control is a view flipping control, the determining (2003) a scaling size of the obtained (S802) internal element comprises:
obtaining a quantity of internal elements of the view flipping control; and
determining a quantity of internal elements of the view flipping control on the second user interface and a scaling size of each internal element based on the quantity of internal elements of the view flipping control, a size of the view flipping control in the large-screen display mode, and a display effect of the view flipping control in the large-screen display mode.

8. The method according to any one of claims 1 to 7, wherein before the determining (S803) a scaling size of the obtained (S802) internal element, the method further comprises:
if a size of the internal element is less than or equal to a specified threshold and/or the internal element is not an internal element of a specified type, abandoning scaling on the element.

9. The method according to any one of claims 1 to 7, wherein the determining (S803) a scaling size of the obtained (S802) internal element comprises:
if a size of the obtained (S802) internal element is less than or equal to a specified threshold, determining to scale up the internal element, and determining the scaling size of the obtained (S802) internal element based on the specified threshold, wherein a size, obtained through scaling up based on the scaling size, of the internal element is not less than the specified threshold.

10. The method according to any one of claims 1 to 9, wherein after the determining (S803) a scaling size of the obtained (S802) internal element, the method further comprises:
if the scaling size of the internal element is less than or equal to the specified threshold, abandoning scaling on the element; or
if the scaling size of the internal element is less than or equal to the specified threshold, determining the scaling size of the internal element based on the specified threshold, wherein a size, obtained through scaling based on the scaling size, of the internal element is not less than the specified threshold.

11. The method according to any one of claims 1 to 10, wherein the determined (S803) scaling size of the obtained (S802) internal element is less than a size of the internal element on the first user interface; and
a quantity of internal elements on the second user interface is greater than a quantity of internal elements on the first user interface.

12. The method according to any one of claims 1 to 11, wherein the determining (1601, 1701, 1801, 1901, 2001, 2101) that the first application is in the large-screen display mode comprises:
obtaining a window width of the first application; and
if the window width is greater than or equal to a specified threshold, determining that the first application is in the large-screen display mode.

13. The method according to any one of claims 1 to 12, wherein the first trigger event comprises:
the terminal (100) switches from a folded state to an unfolded state;
the terminal (100) switches from a portrait mode to a landscape mode;
an entire screen (194) of the terminal (100) is lit up;
a screen (194) of the terminal (100) is projected onto a large screen;
data of the first application is updated when the first application is in the large-screen display mode;
a screen operation event of a user is detected when the first application is in the large-screen display mode; or
a multi-window display mode is canceled and the first application is displayed in full screen when it is detected that the terminal (100) is in a large-screen state, wherein in the multi-window display mode, at least two windows are displayed on a screen (194) of the terminal (100), and one of the at least two windows is used to display the first application.

14. The method according to any one of claims 1 to 13, wherein before the determining (1601, 1701, 1801, 1901, 2001, 2101), based on the first trigger event, that the first application is in the large-screen display mode, the method further comprises:
determining whether the first application is allowed to perform user interface adjustment in the large-screen display mode; and
the determining (1601, 1701, 1801, 1901, 2001, 2101), based on the first trigger event, that the first application is in the large-screen display mode comprises:
if the first application is allowed to perform user interface adjustment in the large-screen display mode, determining whether the first application is in the large-screen display mode.

15. A communication terminal
(100), comprising a display screen (194) for displaying a first application and/or a first user interface and/or a second user interface, a graphical user interface comprising a control configured to lay out an object or data on the graphical user interface in the form of at least one internal element of the control, and one or more processors (110), wherein one or more memories (121) store one or more computer programs, the one or more computer programs comprise instructions, and when the instructions are executed by the one or more processors (110), the communication terminal
(100) is enabled to draw the first and/or the second user interface, to display the first application and/or the first user interface and/or the second user interface in the display screen (194), and to perform the method according to any one of claims 1 to 14.

## Patentansprüche

1. Anzeigeverfahren zur Implementierung durch ein Endgerät (100) oder durch eine Vorrichtung oder ein Modul, die bzw. das dazu konfiguriert ist, das Anzeigeverfahren zu implementieren, wobei ein Anzeigestatus des Endgeräts (100) einen Großbildschirmzustand und einen Kleinbildschirmzustand umfasst, das Endgerät dazu konfiguriert ist, mindestens eine erste Anwendung auszuführen, die erste Anwendung dazu konfiguriert ist, auf einem Anzeigebildschirm (194) des Endgeräts (100) im Vollbildmodus angezeigt zu werden, ein Anzeigemodus der ersten Anwendung, die im Vollbildmodus in dem Großbildschirmzustand des Endgeräts (100) angezeigt wird, ein Großbildschirmanzeigemodus ist, und ein Anzeigemodus der ersten Anwendung, die im Vollbildmodus in dem Kleinbildschirmzustand des Endgeräts (100) angezeigt wird, ein Kleinbildschirmanzeigemodus ist,
wobei eine Steuerung ein grafisches Benutzeroberflächenelement ist, das dazu konfiguriert ist, ein Objekt oder Daten auf der grafischen Benutzeroberfläche in der Form mindestens eines inneren Elements der Steuerung darzustellen, und wobei eine Steuerung mindestens die folgenden Funktionen implementieren kann: eine Funktion zum Ermitteln einer Bildschirmgröße eines Endgeräts und einer Fenstergröße einer Anwendung, eine Funktion zum Identifizieren eines Typs eines inneren Elements der Steuerung und eine Funktion zum Bestimmen einer Skalierungsgröße und eines Layouts des inneren Elements basierend auf der Bildschirmgröße des Endgeräts, der Fenstergröße der Anwendung und dem Typ des inneren Elements,
wobei das Anzeigeverfahren Folgendes umfasst:
Erkennen (S801) eines ersten Auslöseereignisses, das verwendet wird, um das Anzeigen einer ersten Anwendung in dem Großbildschirmanzeigemodus auszulösen, und Bestimmen (1601, 1701, 1801, 1901, 2001, 2101) basierend auf dem ersten Auslöseereignisses, dass sich die erste Anwendung in dem Großbildschirmanzeigemodus befindet;
Ermitteln (S802) eines inneren Elements einer Steuerung auf einer ersten Benutzeroberfläche des Endgeräts (100) und Identifizieren (1602, 1702, 1802, 1902, 2002) eines Typs des inneren Elements;
Bestimmen (S803; 1603, 1703, 1803, 1903, 2003, 2102) einer Skalierungsgröße des inneren Elements basierend auf dem bestimmten Typ des inneren Elements und Bestimmen (1605, 1705, 1805, 1905, 2004, 2005) eines Layouts des inneren Elements basierend auf der bestimmten (1603, 1703, 1803, 1903, 2003) Skalierungsgröße des inneren Elements und einer Größe der Steuerung in dem Großbildschirmanzeigemodus der ersten Anwendung; und
Zeichnen (S804; 1606, 1706, 1806, 2008, 2104) einer zweiten Benutzeroberfläche des Endgeräts (100) basierend auf der bestimmten (1603, 1703, 1803, 1903, 2003, 2102) Skalierungsgröße des inneren Elements und dem bestimmten (1605, 1705, 1805, 1905, 2004, 2005) Layout des inneren Elements der Steuerung, und Anzeigen (S805) der zweiten Benutzeroberfläche des Endgeräts (100).

2. Verfahren nach Anspruch 1, wobei die Größe der Steuerung in dem Großbildschirmanzeigemodus eine Breite der Steuerung in dem Großbildschirmanzeigemodus umfasst; und
die Breite der Steuerung in dem Großbildschirmanzeigemodus mit einer Bildschirmbreite in dem Großbildschirmanzeigemodus verbunden ist; oder
die Breite der Steuerung in dem Großbildschirmanzeigemodus mit einer Fensterbreite der ersten Anwendung in dem Großbildschirmanzeigemodus verbunden ist; oder
die Steuerung in einer ersten Steuerung (30; 32) als untergeordnete Steuerung (31; 33, 34) verschachtelt ist, und die Breite der Steuerung in dem Großbildschirmanzeigemodus mit einer Skalierungsbreite, die von der untergeordneten Steuerung (31; 33, 34) stammt und die durch die erste Steuerung (30; 32) in dem Großbildschirmanzeigemodus bestimmt wird, verbunden ist.

3. Verfahren nach Anspruch 1 oder 2, wobei, sofern die erste Benutzeroberfläche ein erstes Pop-up-Fenster (2401) umfasst, das Verfahren ferner Folgendes umfasst:
Ermitteln (S810) eines inneren Elements einer Steuerung in dem ersten Pop-up-Fenster, Bestimmen einer Skalierungsgröße des inneren Elements, Bestimmen einer Skalierungsgröße der Steuerung in dem ersten Pop-up-Fenster (2401) basierend auf der Skalierungsgröße des inneren Elements und Bestimmen einer Skalierungsgröße des ersten Pop-up-Fensters (2401) basierend auf der Skalierungsgröße der Steuerung in dem ersten Pop-up-Fenster (2401) ;
Bestimmen (S811) einer Position eines skalierten ersten Pop-up-Fensters basierend auf der Skalierungsgröße des ersten Pop-up-Fensters (2401); und
Zeichnen (S812) eines zweiten Pop-up-Fensters (2402) basierend auf einer Größe des ersten Pop-up-Fensters (2401) und der Position des ersten skalierten Pop-up-Fensters, wobei das zweite Pop-up-Fenster (2402) auf der zweiten Benutzeroberfläche enthalten ist, und das zweite Pop-up-Fenster (2402) ein Element umfasst, das über Skalieren basierend auf der Skalierungsgröße des inneren Elements der Steuerung in dem ersten Pop-up-Fenster (2401) ermittelt wird.

4. Verfahren nach einem der Ansprüche 1 bis 3, wobei das Bestimmen (S803) einer Skalierungsgröße des inneren Elements Folgendes umfasst:
Ermitteln (1602, 1702, 1802, 1902, 2002) eines Typs des inneren Elements;
Ermitteln einer Skalierungsstrategie entsprechend dem Typ des inneren Elements basierend auf dem Typ des inneren Elements; und Bestimmen der Skalierungsgröße des inneren Elements basierend auf der Größe der Steuerung in dem Großbildschirmanzeigemodus und der Skalierungsstrategie.

5. Verfahren nach Anspruch 4, wobei der ermittelte Typ des inneren Elements einer von einem Texttyp oder einem Bildtyp ist; und
sofern der Typ des inneren Elements der Bildtyp ist, der Bildtyp einer von einer Vielzahl von Untertypen ist, und die Vielzahl von Untertypen separat mit einem Seitenverhältnis eines Bildes verbunden sind.

6. Verfahren nach einem der Ansprüche 1 bis 5, wobei ein Skalierungsverhältnis einer Breite des inneren Elements vor dem Skalieren zu jener des inneren Elements nach dem Skalieren gleich einem Skalierungsverhältnis einer Höhe des inneren Elements vor dem Skalieren zu jener des inneren Elements nach dem Skalieren ist.

7. Verfahren nach einem der Ansprüche 1 bis 6, wobei, sofern die Steuerung eine Ansichtsumkehrsteuerung ist, das Bestimmen (2003) einer Skalierungsgröße des ermittelten (S802) inneren Elements Folgendes umfasst:
Ermitteln einer Anzahl von inneren Elementen der Ansichtsumkehrsteuerung; und
Bestimmen einer Anzahl von inneren Elementen der Ansichtsumkehrsteuerung auf der zweiten Benutzeroberfläche und einer Skalierungsgröße jedes inneren Elements basierend auf der Anzahl von inneren Elementen der Ansichtsumkehrsteuerung, einer Größe der Ansichtsumkehrsteuerung in dem Großbildschirmanzeigemodus und eines Anzeigeeffekts der Ansichtsumkehrsteuerung in dem Großbildschirmanzeigemodus.

8. Verfahren nach einem der Ansprüche 1 bis 7, wobei das Verfahren vor dem Bestimmen (S803) einer Skalierungsgröße des ermittelten (S802) inneren Elements ferner Folgendes umfasst:
sofern eine Größe des inneren Elements kleiner oder gleich einem festgelegten Schwellenwert ist und/oder das innere Element kein inneres Element eines festgelegten Typs ist, Aufgeben des Skalierens des Elements.

9. Verfahren nach einem der Ansprüche 1 bis 7, wobei das Bestimmen (S803) einer Skalierungsgröße des ermittelten (S802) inneren Elements Folgendes umfasst:
sofern eine Größe des ermittelten (S802) inneren Elements kleiner oder gleich einem festgelegten Schwellenwert ist, Bestimmen des Vergrößerns des inneren Elements, und Bestimmen der Skalierungsgröße des ermittelten (S802) inneren Elements basierend auf dem festgelegten Schwellenwert, wobei eine Größe des inneren Elements, die über Vergrößern basierend auf der Skalierungsgröße ermittelt wird, nicht kleiner als der festgelegte Schwellenwert ist.

10. Verfahren nach einem der Ansprüche 1 bis 9, wobei das Verfahren nach dem Bestimmen (S803) einer Skalierungsgröße des ermittelten (S802) inneren Elements ferner Folgendes umfasst:
sofern die Skalierungsgröße des inneren Elements kleiner oder gleich dem festgelegten Schwellenwert ist, Aufgeben des Skalierens des Elements; oder
sofern die Skalierungsgröße des inneren Elements kleiner oder gleich dem festgelegten Schwellenwert ist, Bestimmen der Skalierungsgröße des inneren Elements basierend auf dem festgelegten Schwellenwert, wobei eine Größe des inneren Elements, die über Skalieren basierend auf der Skalierungsgröße ermittelt wird, nicht kleiner als der festgelegte Schwellenwert ist.

11. Verfahren nach einem der Ansprüche 1 bis 10, wobei die bestimmte (S803) Skalierungsgröße des ermittelten (S802) inneren Elements kleiner als eine Größe des inneren Elements auf der ersten Benutzeroberfläche ist; und
eine Anzahl von inneren Elementen auf der zweiten Benutzeroberfläche größer als eine Anzahl von inneren Elementen auf der ersten Benutzeroberfläche ist.

12. Verfahren nach einem der Ansprüche 1 bis 11, wobei das Bestimmen (1601, 1701, 1801, 1901, 2001, 2101), dass sich die erste Anwendung in dem Großbildschirmanzeigemodus befindet, Folgendes umfasst:
Ermitteln einer Fensterbreite der ersten Anwendung; und
sofern die Fensterbreite größer oder gleich einem festgelegten Schwellenwert ist, Bestimmen, dass sich die erste Anwendung in dem Großbildschirmanzeigemodus befindet.

13. Verfahren nach einem der Ansprüche 1 bis 12, wobei das erste Auslöseereignis Folgendes umfasst:
das Endgerät (100) schaltet von einem zusammengeklappten Zustand in einen aufgeklappten Zustand um;
das Endgerät (100) schaltet von einem Hochformat in ein Querformat um;
ein gesamter Bildschirm (194) des Endgeräts (100) leuchtet auf;
ein Bildschirm (194) des Endgeräts (100) wird auf einen Großbildschirm projiziert;
die Daten der ersten Anwendung werden aktualisiert, wenn sich die erste Anwendung in dem Großbildschirmanzeigemodus befindet;
ein Bildschirmbedienungsereignis eines Benutzers wird erkannt, wenn sich die erste Anwendung in dem Großbildschirmanzeigemodus befindet; oder
ein Anzeigemodus mit mehreren Fenstern wird aufgehoben, und die erste Anwendung wird im Vollbildmodus angezeigt, wenn erkannt wird, dass sich das Endgerät (100) in einem Großbildschirmzustand befindet, wobei in dem Anzeigemodus mit mehreren Fenstern mindestens zwei Fenster auf einem Bildschirm (194) des Endgeräts (100) angezeigt werden und eines der mindestens zwei Fenster verwendet wird, um die erste Anwendung anzuzeigen.

14. Verfahren nach einem der Ansprüche 1 bis 13, wobei das Verfahren vor dem Bestimmen (1601, 1701, 1801, 1901, 2001, 2101) basierend auf dem ersten Auslöseereignis, dass sich die erste Anwendung in dem Großbildschirmanzeigemodus befindet, ferner Folgendes umfasst:
Bestimmen, ob die erste Anwendung in dem Großbildschirmanzeigemodus eine Benutzeroberflächenanpassung durchführen darf; und
das Bestimmen (1601, 1701, 1801, 1901, 2001, 2101) basierend auf dem ersten Auslöseereignis, dass sich die erste Anwendung in dem Großbildschirmanzeigemodus befindet, Folgendes umfasst:
sofern die erste Anwendung eine Benutzeroberflächenanpassung in dem Großbildschirmanzeigemodus durchführen darf, Bestimmen, ob sich die erste Anwendung in dem Großbildschirmanzeigemodus befindet.

15. Kommunikationsendgerät (100), umfassend einen Anzeigebildschirm (194) zum Anzeigen einer ersten Anwendung und/oder einer ersten Benutzeroberfläche und/oder einer zweiten Benutzeroberfläche, eine grafische Benutzeroberfläche, umfassend ein Steuerung, die dazu konfiguriert ist, ein Objekt oder Daten auf der grafischen Benutzeroberfläche in der Form von mindestens einem inneren Element der Steuerung darzustellen, und einen oder mehrere Prozessoren (110), wobei ein oder mehrere Speicher (121) ein oder mehrere Computerprogramme speichern, das eine oder die mehreren Computerprogramme Anweisungen umfassen, und, wenn die Anweisungen durch den oder die Prozessoren (110) ausgeführt werden, das Kommunikationsendgerät (100) in der Lage ist, die erste und/oder die zweite Benutzeroberfläche zu zeichnen, um die erste Anwendung und/oder die erste Benutzeroberfläche und/oder die zweite Benutzeroberfläche auf dem Anzeigebildschirm (194) anzuzeigen und das Verfahren nach einem der Ansprüche 1 bis 14 durchzuführen.

## Revendications

1. Procédé d'affichage mis en œuvre par un terminal (100) ou par un appareil ou un module configuré pour mettre en œuvre le procédé d'affichage, dans lequel un état d'affichage du terminal (100) comprend un état grand écran et un état petit écran, le terminal est configuré pour exécuter au moins une première application, la première application est configurée pour être affichée en plein écran sur un écran d'affichage (194) du terminal (100), un mode d'affichage de la première application affichée en plein écran en état grand écran du terminal (100) est un mode d'affichage grand écran, et un mode d'affichage de la première application affichée en plein écran en état petit écran du terminal (100) est un mode d'affichage petit écran, dans lequel une commande est un élément d'interface utilisateur graphique configuré pour disposer un objet ou des données sur l'interface utilisateur graphique sous la forme d'au moins un élément interne de la commande, et dans lequel une commande peut mettre en œuvre au moins les fonctions suivantes : une fonction permettant d'obtenir une taille d'écran d'un terminal et une taille de fenêtre d'une application, une fonction permettant d'identifier un type d'un élément interne de la commande, et une fonction permettant de déterminer une taille de mise à l'échelle et une disposition de l'élément interne sur la base de la taille d'écran du terminal, de la taille de fenêtre de l'application et du type de l'élément interne,
dans lequel le procédé d'affichage comprend :
la détection (S801) d'un premier événement de déclenchement utilisé pour déclencher l'affichage d'une première application en mode d'affichage grand écran, et le fait de déterminer (1601, 1701, 1801, 1901, 2001, 2101), sur la base du premier événement de déclenchement, que la première application est en mode d'affichage grand écran ;
l'obtention (S802) d'un élément interne d'une commande sur une première interface utilisateur du terminal (100), et l'identification (1602, 1702, 1802, 1902, 2002) d'un type de l'élément interne ;
la détermination (S803 ; 1603, 1703, 1803, 1903, 2003, 2102) d'une taille de mise à l'échelle de l'élément interne sur la base du type déterminé de l'élément interne, et la détermination (1605, 1705, 1805, 1905, 2004, 2005) d'une disposition de l'élément interne sur la base de la taille de mise à l'échelle déterminée (1603, 1703, 1803, 1903, 2003) de l'élément interne et d'une taille de la commande en mode d'affichage grand écran de la première application ; et
le fait de dessiner (S804 ; 1606, 1706, 1806, 2008, 2104) une seconde interface utilisateur du terminal (100) sur la base de la taille de mise à l'échelle déterminée (1603, 1703, 1803, 1903, 2003, 2102) de l'élément interne et de la disposition déterminée (1605, 1705, 1805, 1905, 2004, 2005) de l'élément interne de la commande, et l'affichage (S805) de la seconde interface utilisateur du terminal (100).

2. Procédé selon la revendication 1, dans lequel la taille de la commande en mode d'affichage grand écran comprend une largeur de la commande en mode d'affichage grand écran ; et
la largeur de la commande en mode d'affichage grand écran est associée à une largeur d'écran en mode d'affichage grand écran ; ou
la largeur de la commande en mode d'affichage grand écran est associée à une largeur de fenêtre de la première application en mode d'affichage grand écran ; ou
la commande est imbriquée dans une première commande (30 ; 32) en tant que commande enfant (31 ; 33, 34), et la largeur de la commande en mode d'affichage grand écran est associée à une largeur de mise à l'échelle qui est celle de la commande enfant (31 ; 33, 34) et qui est déterminée par la première commande (30 ; 32) en mode d'affichage grand écran.

3. Procédé selon la revendication 1 ou 2, dans lequel si la première interface utilisateur comprend une première fenêtre contextuelle (2401), et le procédé comprend également :
l'obtention (S810) d'un élément interne d'une commande dans la première fenêtre contextuelle, la détermination d'une taille de mise à l'échelle de l'élément interne, la détermination d'une taille de mise à l'échelle de la commande dans la première fenêtre contextuelle (2401) sur la base de la taille de mise à l'échelle de l'élément interne et la détermination d'une taille de mise à l'échelle de la première fenêtre contextuelle (2401) sur la base de la taille de mise à l'échelle de la commande dans la première fenêtre contextuelle (2401) ;
la détermination (S811), sur la base de la taille de mise à l'échelle de la première fenêtre contextuelle (2401), et d'un emplacement d'une première fenêtre contextuelle mise à l'échelle ; et
le fait de dessiner (S812) une seconde fenêtre contextuelle (2402) sur la base d'une taille de la première fenêtre contextuelle (2401) et de l'emplacement de la première fenêtre contextuelle mise à l'échelle, dans lequel la seconde fenêtre contextuelle (2402) est comprise sur la seconde interface utilisateur, et la seconde fenêtre contextuelle (2402) comprend un élément obtenu par mise à l'échelle sur la base de la taille de mise à l'échelle de l'élément interne de la commande dans la première fenêtre contextuelle (2401).

4. Procédé selon l'une quelconque des revendications 1 à 3, dans lequel la détermination (S803) d'une taille de mise à l'échelle de l'élément interne comprend :
l'obtention (1602, 1702, 1802, 1902, 2002) d'un type de l'élément interne ;
l'obtention, sur la base du type de l'élément interne, d'une stratégie de mise à l'échelle correspondant au type de l'élément interne ; et
la détermination de la taille de mise à l'échelle de l'élément interne sur la base de la taille de la commande en mode d'affichage grand écran et de la stratégie de mise à l'échelle.

5. Procédé selon la revendication 4, dans lequel le type obtenu de l'élément interne est l'un d'un type texte et d'un type image ; et
si le type de l'élément interne est le type image, le type image est l'un d'une pluralité de sous-types, et la pluralité de sous-types sont associés séparément à un rapport de forme d'une image.

6. Procédé selon l'une quelconque des revendications 1 à 5, dans lequel le rapport d'échelle d'une largeur de l'élément interne avant mise à l'échelle par rapport à celle de l'élément interne après mise à l'échelle est égal au rapport d'échelle d'une hauteur de l'élément interne avant mise à l'échelle par rapport à celle de l'élément interne après mise à l'échelle.

7. Procédé selon l'une quelconque des revendications 1 à 6, dans lequel, si la commande est une commande de retournement de vue, la détermination (2003) d'une taille de mise à l'échelle de l'élément interne obtenu (S802) comprend :
l'obtention d'une quantité d'éléments internes de la commande de retournement de vue ; et
la détermination d'une quantité d'éléments internes de la commande de retournement de vue sur la seconde interface utilisateur et d'une taille de mise à l'échelle de chaque élément interne sur la base de la quantité d'éléments internes de la commande de retournement de vue, d'une taille de la commande de retournement de vue en mode d'affichage grand écran et d'un effet d'affichage de la commande de retournement de vue en mode d'affichage grand écran.

8. Procédé selon l'une quelconque des revendications 1 à 7, dans lequel, avant la détermination (S803) d'une taille de mise à l'échelle de l'élément interne obtenu (S802), le procédé comprend également :
si une taille de l'élément interne est inférieure ou égale à un seuil spécifié et/ou si l'élément interne n'est pas un élément interne d'un type spécifié, l'abandon de la mise à l'échelle de l'élément.

9. Procédé selon l'une quelconque des revendications 1 à 7, dans lequel la détermination (S803) d'une taille de mise à l'échelle de l'élément interne obtenu (S802) comprend :
si une taille de l'élément interne obtenu (S802) est inférieure ou égale à un seuil spécifié, la détermination de la mise à l'échelle de l'élément interne et la détermination de la taille de mise à l'échelle de l'élément interne obtenu (S802) sur la base du seuil spécifié, dans lequel une taille, obtenue par mise à l'échelle sur la base de la taille de mise à l'échelle, de l'élément interne n'est pas inférieure au seuil spécifié.

10. Procédé selon l'une quelconque des revendications 1 à 9, dans lequel, après la détermination (S803) d'une taille de mise à l'échelle de l'élément interne obtenu (S802), le procédé comprend également :
si la taille de mise à l'échelle de l'élément interne est inférieure ou égale au seuil spécifié, l'abandon de la mise à l'échelle de l'élément ; ou
si la taille de mise à l'échelle de l'élément interne est inférieure ou égale au seuil spécifié, la détermination de la taille de mise à l'échelle de l'élément interne sur la base du seuil spécifié, dans lequel une taille, obtenue par mise à l'échelle sur la base de la taille de mise à l'échelle, de l'élément interne n'est pas inférieure au seuil spécifié.

11. Procédé selon l'une quelconque des revendications 1 à 10, dans lequel la taille de mise à l'échelle déterminée (S803) de l'élément interne obtenu (S802) est inférieure à une taille de l'élément interne sur la première interface utilisateur ; et une quantité d'éléments internes de la seconde interface utilisateur est supérieure à la quantité d'éléments internes de la première interface utilisateur.

12. Procédé selon l'une quelconque des revendications 1 à 11, dans lequel le fait de déterminer (1601, 1701, 1801, 1901, 2001, 2101) que la première application est en mode d'affichage grand écran comprend :
l'obtention d'une largeur de fenêtre de la première application ; et
si la largeur de fenêtre est supérieure ou égale à un seuil spécifié, le fait de déterminer que la première application est en mode d'affichage grand écran.

13. Procédé selon l'une quelconque des revendications 1 à 12, dans lequel le premier événement de déclenchement comprend :
le terminal (100) passe d'un état plié à un état déplié ;
le terminal (100) passe d'un mode portrait à un mode paysage ;
un écran entier (194) du terminal (100) est allumé ;
un écran (194) du terminal (100) est projeté sur un grand écran ;
des données de la première application sont mises à jour lorsque la première application est en mode d'affichage grand écran ;
un événement de fonctionnement d'écran d'un utilisateur est détecté lorsque la première application est en mode d'affichage grand écran ; ou
un mode d'affichage multi-fenêtres est annulé et la première application est affichée en plein écran lorsqu'il est détecté que le terminal (100) est dans un état grand écran, dans lequel, en mode d'affichage multi-fenêtres, au moins deux fenêtres sont affichées sur un écran (194) du terminal (100), et l'une des au moins deux fenêtres est utilisée pour afficher la première application.

14. Procédé selon l'une quelconque des revendications 1 à 13, dans lequel, avant de déterminer (1601, 1701, 1801, 1901, 2001, 2101), sur la base du premier événement de déclenchement, que la première application est en mode d'affichage grand écran, le procédé comprend également :
le fait de déterminer si la première application est autorisée à réaliser un ajustement d'interface utilisateur en mode d'affichage grand écran ; et
le fait de déterminer (1601, 1701, 1801, 1901, 2001, 2101), sur la base du premier événement de déclenchement, que la première application est en mode d'affichage grand écran comprend :
si la première application est autorisée à réaliser un ajustement d'interface utilisateur en mode d'affichage grand écran, le fait de déterminer si la première application est en mode d'affichage grand écran.

15. Terminal de communication (100), comprenant un écran d'affichage (194) pour afficher une première application et/ou une première interface utilisateur et/ou une seconde interface utilisateur, une interface utilisateur graphique comprenant une commande configurée pour disposer un objet ou des données sur l'interface utilisateur graphique sous la forme d'au moins un élément interne de la commande, et un ou plusieurs processeurs (110), dans lequel une ou plusieurs mémoires (121) stockent un ou plusieurs programmes informatiques, les un ou plusieurs programmes informatiques comprennent des instructions, et lorsque les instructions sont exécutées par les un ou plusieurs processeurs (110), le terminal de communication (100) est activé pour dessiner la première et/ou la seconde interface utilisateur, pour afficher la première application et/ou la première interface utilisateur et/ou la seconde interface utilisateur sur l'écran d'affichage (194), et pour réaliser le procédé selon l'une quelconque des revendications 1 à 14.
